(19) Europäisches Patentamt / European Patent Office / Office européen des brevets

(11) **EP 3 506 123 B1**

(12) **EUROPEAN PATENT SPECIFICATION**

(45) Date of publication and mention
of the grant of the patent:
**11.08.2021 Bulletin 2021/32**

(51) Int Cl.:
**G06F 16/903** *(2019.01)*    **G06F 16/29** *(2019.01)*

(21) Application number: **18248295.0**

(22) Date of filing: **28.12.2018**

(54) **COMPUTER SYSTEM AND METHOD FOR FAST SELECTION OF NAMES IN A DATABASE OF PERSON DATA**

COMPUTERSYSTEM UND VERFAHREN ZUR SCHNELLEN AUSWAHL VON NAMEN IN EINER DATENBANK MIT PERSONENBEZOGENEN DATEN

SYSTÈME INFORMATIQUE ET PROCÉDÉ DE SÉLECTION RAPIDE DE NOMS DANS UNE BASE DE DONNÉES DE PERSONNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2017 PL 42411217**

(43) Date of publication of application:
**03.07.2019 Bulletin 2019/27**

(73) Proprietor: **CRIF Sp Zoo**
**31-476 Kraków (PL)**

(72) Inventor: **PIETRZYK, Mateusz**
**32-064 NIELEPICE (PL)**

(74) Representative: **Nannucci, Lorenzo et al**
**Studio Torta S.p.A.**
**Via Viotti, 9**
**10121 Torino (IT)**

(56) References cited:
**US-A1- 2009 089 283    US-B1- 6 963 871**

- **HESHAM H ABDEL GHAFOUR ET AL: "AEDA: Arabic edit distance algorithm Towards a new approach for Arabic name matching", COMPUTER ENGINEERING&SYSTEMS (ICCES), 2011 INTERNATIONAL CONFERENCE ON, IEEE, 29 November 2011 (2011-11-29), pages 307-311, XP032103842, DOI: 10.1109/ICCES.2011.6141061 ISBN: 978-1-4577-0127-6**
- **Kevin Sahr ET AL: "Geodesic Discrete Global Grid Systems", Cartography and Geographic Information Science, 1 April 2003 (2003-04-01), pages 121-134, XP055567259, DOI: 10.1559/152304003100011090 Retrieved from the Internet: URL:http://cs.sou.edu/~sahrk/dgg/pubs/gdggs03.pdf**
- **CLODOVEU A. DAVIS ET AL: "Assessing the Certainty of Locations Produced by an Address Geocoding System", GEOINFORMATICA, vol. 11, no. 1, 13 January 2007 (2007-01-13), pages 103-129, XP055568747, Boston ISSN: 1384-6175, DOI: 10.1007/s10707-006-0015-7**

**Description**

CROSS-REFERENCE TO APPLICATIONS

This Patent application claims priority from Polish Patent Application No. P.424112 filed on December 29, 2017.

TECHNICAL FIELD

The present solution relates to a computer system and method for fast selection of names in a database of person data.

BACKGROUND ART

The problem of fast selection of person/company names (in the following, reference will be made only to person names, for sake of clarity, without this implying any loss of generality) in large databases of person data is a common issue in modern information systems. One of core elements of an information system of any company providing goods or services is indeed a database of persons names together with their addresses, phone numbers and various additional attributes.

A typical database of person data stores a plurality of records containing person name (first and last name) and address (including geo-coordinates) covering the population of a given area or country. Selection operations in the database envisage finding (identifying) records or entries in the database that correspond to a desired person based on provided input data.

With a hypothetical perfect technology, regardless of data quality provided by the user (as search criteria) and the database content quality, if the requested person does appear in the database, it should always be found. In real situations, however, person names in the database might contain errors (typos, missing information and/or irrelevant information); also, the input search request can exhibit the same problems.

These errors may be due to human mistakes in the introduction of data, impairing data completeness/correctness or including unnecessary information; or may even be due to bad faith and fraudulent behaviors, in case of persons that purposely want to present themselves as not-identified, therefore making a combination of all of the above problems on purpose, e.g. trying to "scramble" own personal data to "fool" the identification system. The above discussed errors may also be due to technical problems, e.g. resulting from inter-operation of various information processing systems, such as encoding problems, OCR (Optical Character Recognition) errors, or the like.

A common issue in known database systems can thus be formulated as follows: given an input request (including at least a name and an address), efficiently finding similar names in the database records, with a high level of accuracy and a fast search time.

HESHAM H ABDEL GHAFOUR ET AL, "AEDA: Arabic edit distance algorithm Towards a new approach for Arabic name matching", Computer Engineering&Systems (ICCES), 2011 International Conference On, IEEE, (20111129), pages 307 - 311, discloses a new algorithm for Arabic string matching which takes into consideration the unique features of the Arabic language and the different similarity levels of the Arabic letters such as phonetic similarity and character form similarity in addition to keyboard distance. In particular, the document discloses a modification of the original Levenshtein algorithm to address the issue of varying weight/cost of various edit operations.Kevin Sahr ET AL, "Geodesic Discrete Global Grid Systems", Cartography and Geographic Information Science, pages 121 -134, discloses a number of data structures for global geo-referenced data sets based on regular, multi-resolution partitions of polyhedra. In particular, the document discloses a survey of the most promising of such systems, which are called Geodesic Discrete Global Grid Systems (Geodesic DGGSs).CLODOVEU A. DAVIS ET AL, "Assessing the Certainty of Locations Produced by an Address Geocoding System", GEOINFORMATICA, Boston, (2007-01-13), vol. 11, no. 1, pages 103 - 129, discloses a conceptual schema for addressing databases. The schema is flexible enough to accommodate a variety of addressing systems, at various levels of detail, and in different countries, departing from the usual geocoding strategy employed in commercial GIS products, which is usually limited to the average American or British address format. The schema also extends the notion of postal address to something broader, including popular names for places, building names, reference places, and other concepts.

DISCLOSURE OF INVENTION

The aim of the present solution is to solve, at least in part, the problems previously highlighted, and in general to provide improved automated solutions for fast selection of names in a large database of person data.

According to the present solution, a computer system and a computer method are provided, as defined in the appended claims.

## BRIEF DESCRIPTION OF THE DRAWINGS

For a better understanding of the present invention, preferred embodiments thereof are now described, purely by way of non-limiting examples, with reference to the attached drawings, wherein:

- Figure 1 is a schematic block diagram of a computer system according to the present solution;
- Figures 2A-2B, 3A-3B, 4A-4E, 5A-5B show exemplary hierarchical geographic areas, which are used for indexing data in a person database, according to aspects of the present solution; and
- Figures 6-9 are flow charts relating to operations performed in the computer system, according to further aspects of the present solution.

## BEST MODE FOR CARRYING OUT THE INVENTION

In general, the present solution relates to the field of database record similarity matching.

The field of similarity matching has a broad research base; recent developments include the following:

Klaus U. Schulz, Stoyan Mihov, "Fast String Correction with Levenshtein-Automata", International Journal on Document Analysis and Recognition, November 2002, Volume 5, Issue 1, pages 67-85; and

Petar N. Mitankin, "Universal Levenshtein Automata. Building and Properties (Thesis)", Sofia, 2005, University St. Kliment Ohridski.

These documents disclose the concept of Universal Levenshtein Automata (ULA), which is a finite state machine created for a given Levenshtein distance (e.g. 1 or 2), that is able to quickly find for a given database of strings and an input string, all strings from the database with the assumed Levenshtein distance from the input string; the Levenshtein distance being a measure for the difference between two character strings as a minimum number of atomic changes which are required to convert the first character string into the second character string (atomic changes are for example the insertion, the deletion and the replacement of an individual letter).

The ULA concept is a generic one: it does not take the language semantics into account. In other words, given an input name "ROS", it would return both "ROZ" and "ROB" as equally similar strings, both having a Levenshtein distance of 1 against the input name. However, in real life applications, considering the language context, the "ROS/ROZ" pair has much higher similarity than the "ROS/ROB" pair; in fact, the second example might not be even treated as similar since they are distinct different first names.

Moreover, application of the ULA in the field of large databases of person data generally does not allow to achieve a fast identification response.

As will be detailed in the following, aspects of the present solution therefore envisage:

- indexing of names in the database with geo-coordinate attributes, allowing fast lookup of similar names in geographic proximity of a given input address, where the name similarity and the geographic proximity are jointly evaluated to form a weighted measure (e.g. more similar names that are far geographically to the input can be considered to differ more than less similar names close geographically to the input); and
- an extension of the ULA concept (in the following denoted as EULA, Extended ULA), so that it supports similarity searching of names (first, last) with respect to languages, taking language specific semantics into account.

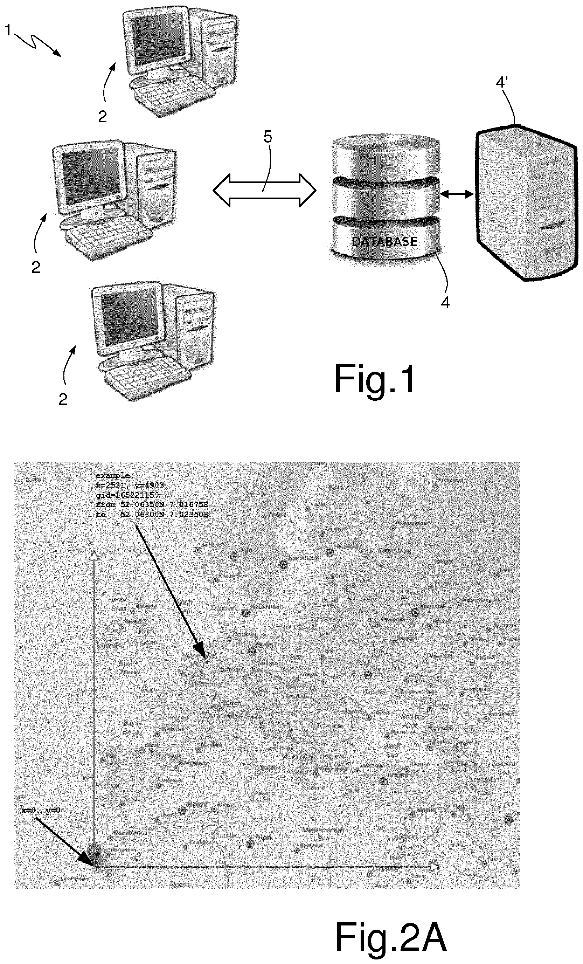

As schematically shown in Figure 1, the present solution is generally implemented as a computer system 1, which may include a number of computing units 2, e.g. a personal computer, a laptop, or any kind of processing unit including a data processor and providing a input user-interface, coupled (e.g. in a client-to-server relation) to a person database 4 (PDB), storing personal data as records (or entries).

Each computing unit 2 is coupled to person database 4 via a communication link 5 and any kind of communication interface, e.g. via a network interface or a GUI interface; person database 4 is generally arranged remotely from the computing units 2, associated with a dedicated server 4' provided with a respective processing unit.

Computing unit 2 and server 4' cooperate to perform an automated method of fast selection of names in the records of personal data stored in the person database 4, based on an input request provided via the input user-interface; according to an embodiment, processing unit of server 4' is designed to execute computer program instructions to allow fast selection of names in the person database 4 in response to the input request.

In the following, the automated method implemented by the computer system 1 will be discussed in details; even if reference will not always be made to the computing system 1, it is however understood that the automated method is performed in the same computing system 1.

According to an embodiment, the person database 4 is conceptually treated as a set of records having the following form:

[recordID; firstName; lastName; SID; houseNumber; geo-coordinates]. wherein SID (Street ID) is a unique identifier assigned to a street based on the postal address reference; it is indeed assumed that each record in the person database 4, in addition to the first and last name tokens of the associated person and the address geo-coordinates, contains the SID of the street address and the house number associated to the address.

A hierarchy of geolocation areas used for database name indexing is first described; starting from a smallest geolocation area to a largest geolocation area, these geolocation areas are the following:

- GID: a square area, e.g. approximately 500m x 500m;
- SGS: a surrounding of a street;
- GACID: an area covering a group of "administrative" cities/villages; and
- GLOBAL: the whole territory or country.

In more details, it is assumed that each address in person database 4 (in particular, a corresponding house) has geolocation attributes (in terms of latitude and longitude).

Raw geolocation attributes are not suitable for database indexing, since a single index lookup would only return a single geo-point (i.e. a single house). Therefore, the concept of Geo-ID (GID in short) is introduced, which provides: coarser-granularity than raw geo-coordinates and an easy index lookup of neighboring geo-points.

GIDs are created as follows: the whole geographic area (e.g. Europe) is covered by a grid of squares, approximately 500m x 500m; each square is identified by x and y coordinates, which, combined into one integer value, define one GID. The combination of two coordinates (x, y) into a single integer value is for example performed as follows:

$$(x << 16) \mid y$$

where "<<" is the binary LEFT SHIFT operator, and "|" is the binary OR operator.

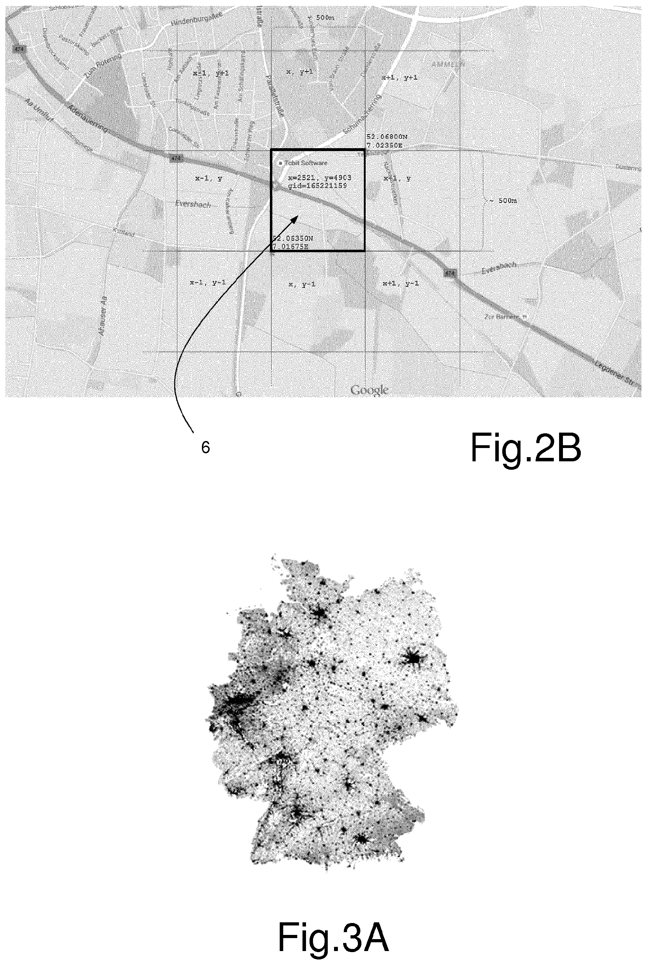

Figures 2A-2B show an exemplary GID, on a portion of a geographic area; also shown in Figure 2B are surrounding GIDs, adjacent to the exemplary GID, here denoted with 6.

Basic operations on GIDs include parsing real geo-coordinates (latitude, longitude) from a GID and vice-versa, e.g. according to the following expressions:

$$x(longitude) = (longitude - -10.00000) / 0.00675;$$

$$y(latitude) = (latitude - 30.00000) / 0.00450;$$

$$getGid(x, y) = (x << 16) \mid y$$

$$getX(gid) = gid >>> 16$$

$$getY(gid) = gid \& 0xFFFF$$

Minimum longitude (in the example, -10.00000) and minimum latitude (in the example, 30.00000) are chosen so that the GID infrastructure can cover the whole Europe. The longitude and latitude steps (in the example, 0.00675 and 0.00450) are chosen so that they approximate a 500m x 500m square in the middle of Europe (this approximation is sufficient for indexing needs, Earth curvature need not be considered); this setup allows the GID to be a 4-byte integer value. The concept is easily extendable to cover the whole world, using a longer integer for the GID (e.g. a 8-byte value), or even smaller territories.

Basic operations on GIDs moreover include:

- transforming GID into approximate real geo-coordinates (in the center of the GID square) is a simple reverse of the above transformation with a shift to the middle of the GID square;
- for a given GID, surrounding GIDs, moving north/south/east/west, can be determined with the following expressions:

```
directionNorth: getGid(getX(gid), getY(gid)+1);
directionSouth: getGid(getX(gid), getY(gid)-1);
directionEast : getGid(getX(gid)+1, getY(gid));
directionWest : getGid(getX(gid)-1, getY(gid)).
```

Using the above transformations, the set of GIDs in proximity of a given GID can easily be computed.

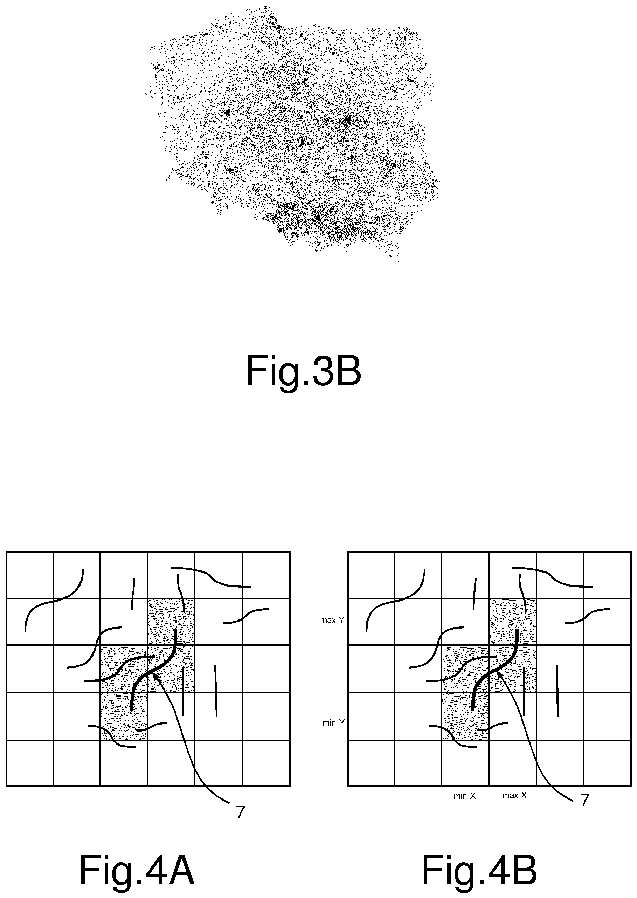

Figures 3A and 3B show the actual representation of GIDs for two exemplary countries, Germany and Poland, where each pixel (in the original, not-resized image) is one GID, and the population of the GID is represented by the color darkness.

The GID concept described above is a basic building block and the "smallest" object in which database name indexing will be performed; the next object in the hierarchy is called "street geographical surrounding" (SGS), where "street" here is intended to encompass the combination of street and postal code (an actual street spanning multiple postal codes will thus be treated as multiple "streets").

The street geographical surrounding SGS of a location is a mapping SID → {SID1, SID2, ..., SIDn}, where the mapped list of SIDs represents all streets that geographically surround a given SID; it is assumed that the list of surrounding streets includes the street itself.

Referring to Figures 4A-4D, the surrounding streets of a given SID 7 are found with the following SGS lookup algorithm:

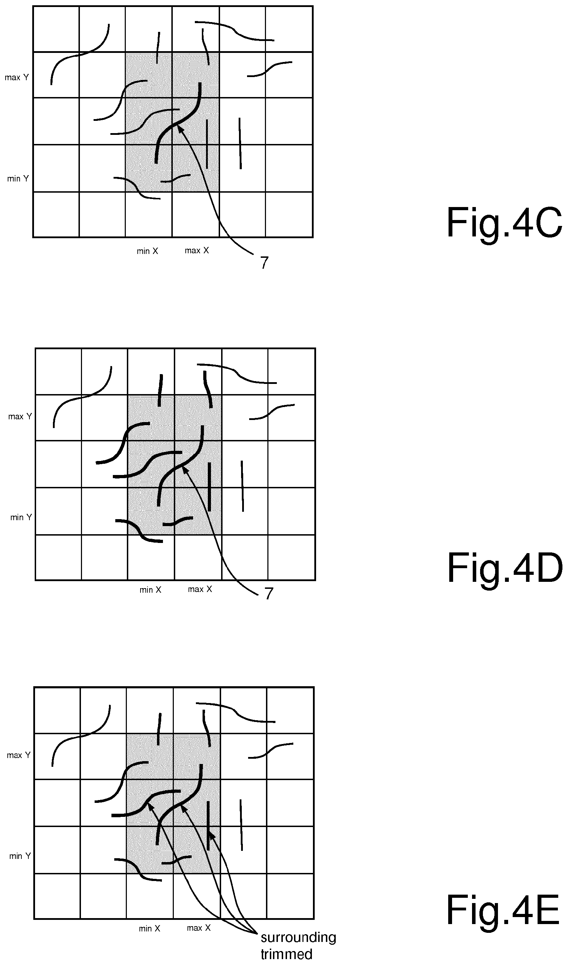

- find all GIDs (and their corresponding (x,y) coordinates) for the given SID, as shown in Figure 4A; this can be achieved through iterating over all houses (from postal address reference) for the given SID 7;
- from the above GIDs, find min/max values of coordinates x and y, as shown in Figure 4B;
- get all GIDs determined by the above min/max values of x and y, as shown in Figure 4C;
- get all SIDs that cross all of the GIDs found in the previous operation, as shown in Figure 4D.

According to an aspect of the solution, the SGS thus determined may be "trimmed", based on the population contained therein.

Indeed, as discussed above, the SGS only depends on the postal address reference data; it is independent of the person database 4. Since the SGS is, however, only an indexing instrument to get the actual records (i.e. similar person names) in the geographical surrounding of a given street, a problem may arise concerning the unpredictable number of actual records in the SGS (i.e. the records on streets belonging to the SGS); this number can explode to millions for congested areas of big cities.

Therefore, a "trimmed" version of the street geographical surrounding SGS may be introduced, which takes into consideration the content of person database 4.

First, for each SID, the number of unique database records, in terms of (firstName, lastName) pairs, is determined, as the "SID name population". The above discussed SGS lookup algorithm for the "trimmed surrounding" may envisage, instead of adding all SIDs that cross all of the GIDs found (as specified above), to:

- sort all GIDs found, by the geographical distance to the center of the area shown in Figure 4B; and
- start with the "origin" SID 7 and keep adding the above GIDs (i.e. SIDs that cross them) until the total name population of all SIDs added so far is greater than a maximum population threshold, e.g. 50k (this guarantees that the surrounding population does not get out of hand, i.e. exceeds the maximum set threshold).

Figure 4E shows the trimmed version of the SGS, considering the example shown in previous Figure 4D.

The next object in the geographical area hierarchy is the "grouping administrative city", GACID, which is designed to represent a large area covering whole cities, or regions in a country that are connected by the city name and/or the most significant part of the postal code. GACID may be constructed using the following algorithm:

- create a mapping between the prefix of the postcode, e.g. formed by the three first digits thereof, and the set of cities having that postal code prefix;
- for each of the sets of cities determined above, the largest city from the set is picked and a mapping is created between this largest city and all the other cities in the set.

In this manner, a mapping in the form: {city} -> {parentCity} is created, where each "parent city" defines the center of a GACID; a single GACID being in fact a city X with all its surrounding cities (i.e. cities that have X as their "parent city" in the GACID mapping).

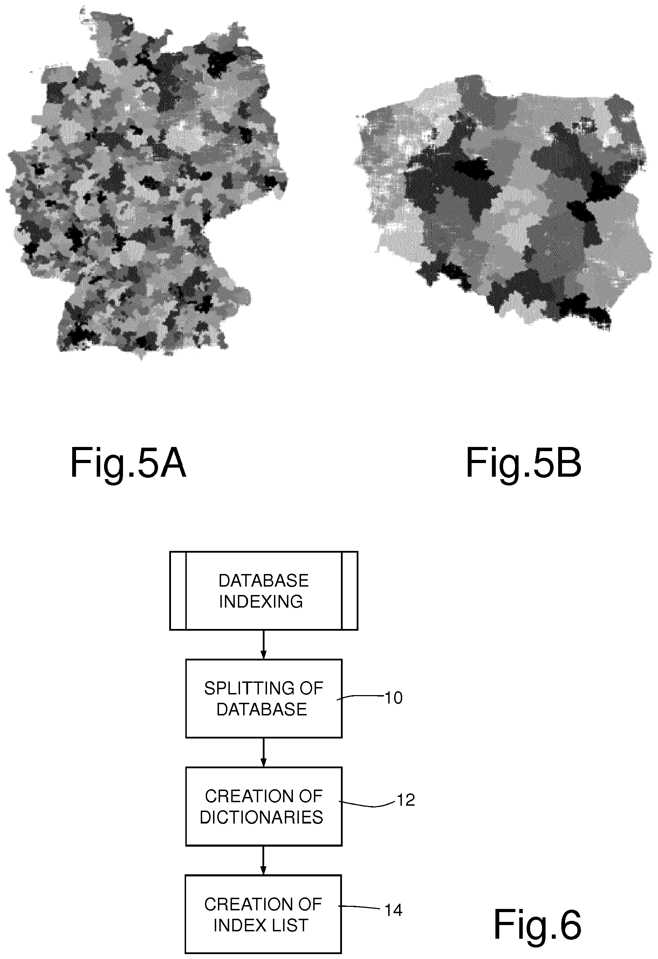

Figures 5A and 5B show the actual representation of GACIDs for two exemplary countries, again Germany and Poland.

The last element of the geographical area hierarchy is the whole territory or country, GLOBAL: in terms of the person database 4, it simply means the whole database.

Indexing of the data contained in the person database 4, based on the hierarchy of geographic areas, is now discussed in more details, referring also to Figure 6.

In particular, for each of the geographic area levels, here denoted with L, in the above hierarchy including (GID, SGS, GACID, GLOBAL):

- at step 10, the person database 4 is split into a list of database objects PDB_L_1, ..., PDB_L_$n_L$, where each of the database objects PDB_L_i contains data from a respective geographic area L_i, with $n_L$ being the total number of geographic areas in the respective area level L (for example, taking the person database 4 of Germany, there are: ~500k GID database objects PDB_GID_i; 1m SGS database objects PDB_SGS_i; 600 GACID databases objects PDB_GACID_i; and a single GLOBAL database/index PDB_GLOBAL);
- at step 12, two dictionary automatons (an "automaton" being a finite state machine that recognizes strings belonging to a given dictionary, as will be detailed in the following) for each database object PDB_L_i are created, one for first name tokens and the other one for last name tokens contained therein;
- at step 14, two index lists are created for each of the database object PDB_L_i: a first-name index list, including a list of sorted identifiers (recordIDs) of records in the person database 4 that contain given first name tokens; and a last-name index list, including a list of sorted identifiers of records that contain given last name tokens (given that a list is created for each of the first/last name tokens, in the end there are as many lists as there are tokens).

It is underlined that, in the above description, the term "database object PDB_L_i" is used conceptually: it does not necessarily mean an element of a DBMS (DataBase Management System); it could as well be a file, an in-memory data structure, or similar.

All of the above databases/index lists form the so called Person Index of the person database 4, wherein each of the database objects PDB_L_i has exactly the same structure, for instance:

```
{
    FNDict: {FRANK, MICHAEL, PETER, JOHN, ...}
    LNDict: {MEIER, SMITH, PETERS, ...}
    FN Index:
        FRANK → { id, id, id, ... }
        JOHN → { id, id, id, ... }
        MICHAEL → { id, id, id, ... }
        PETER → { id, id, id, ... }
    LN Index:
        MEIER → { id, id, id, ... }
        PETERS → { id, id, id, ... }
        SMITH → { id, id, id, ... } }
```

In particular, each database object PDB_L_i contains: a first-name dictionary, including the first name tokens found in the respective geographic area; a last-name dictionary, including the last name tokens found in the respective geographic area; and, for each given first name and each last name tokens, FN/LN index lists of the identifiers (recordIDs) of the records in the person database 4 that contain the given first and last name tokens (above denoted, in general, with "id").

The generated Person Index of the person database 4 allows to quickly identify and select similar records in the person database 4, in response to an input query, the so called "index lookup" operation; this operation advantageously combines the concept of extended ULA (which will be discussed in more details in the following), with the above concept of the hierarchy of geographic areas.

In particular, two static Extended ULAs, EULA(1) and EULA(2) (that will be described in details in the following), are implemented to find similar first/last names in the dictionary automatons of the database objects PDB_L_i (with similarity with Levenshtein distance 1 and 2, respectively). In order to find exact first/last names (i.e. results with Levenshtein distance 0), it is enough to perform a direct lookup in the FN/LN index lists, without the use of the EULA implementation.

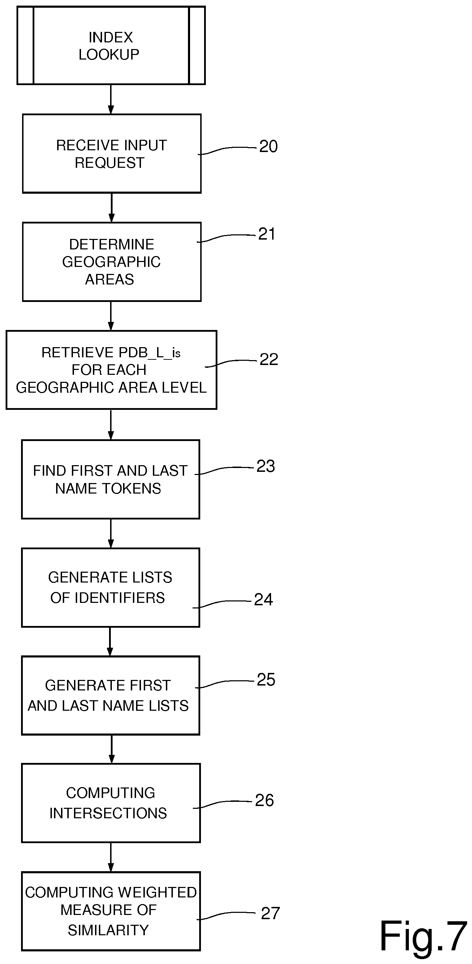

In details, and referring also to Figure 7, at step 20, an input request is received by the computing module 2, including the person/address to be searched, including first name, last name and address of the person to be searched in the person database 4.

At step 21, considering the address of the input request, based on the postal reference data, the city, SID, and houseNumber of the address are found; that, in turn, allows to determine the actual GID, GSG, and GACID associated to that address, i.e. the hierarchical geographical areas associated to the input address.

Having determined the GID, GSG, and GACID of the input address, a look-up at each of the geographical area levels L is performed at step 22, to retrieve the respective PDB_L_i in the Person Index (here, "i" refers to the actual GID, GSG, and GACID associated to the input request). For example, if the input request gives GID=5, GSG=10, GACID=20, then PDB_GID_5, PDB_GSG_10, and PDB_GACID_20 are considered in the Person Index; obviously, in the considered example, PDB_GLOBAL_1 does not need any lookup as there is only one GLOBAL PDB, corresponding to the whole person database 4.

Next, at step 23, considering the firstName (FN) of the input request and the database objects PDB_L_i retrieved for each of the geographical area levels L, a lookup for the first name FN is performed to retrieve respective first name token hits, as follows:

- first names with Levenshtein distance 0 against the input firstName FN are firstly retrieved, performing a direct lookup in the FN index lists of the database objects PDB_L_i;
- first names with Levenshtein distance 1 are retrieved, implementing the EULA(1) on the first name dictionaries of the database objects PDB_L_i, according to the following expression:

$$\texttt{EULA(1)(FN, PDB\_L\_i\_FNDict) = \{ fnc\_L\_1\_1, …, fnc\_L\_1\_n \};}$$

- first names with Levenshtein distance 2 are retrieved, using the EULA(2), according to the following expression:

$$\texttt{EULA(2)(FN, PDB\_L\_i\_FNDict) = \{ fnc\_L\_2\_1, …, fnc\_L\_2\_m \}.}$$

Each fnc_L_0_j, fnc_L_1_j, fnc_L_2_j represents a respective name token hit at the respective hierarchical level L, with Levenshtein distance 0, 1 or 2.

In a corresponding manner, considering the lastName (LN) of the input request, look-up for the last name LN is performed to retrieve last name token hits, as follows:

- last names with distance 0 against the input lastName LN are firstly retrieved, performing a direct lookup in the LN index lists of the PDB_L_i;
- last names with distance 1 are retrieved, using the EULA(1), according to the following expression:

$$\texttt{EULA(1)(LN, PDB\_L\_i\_LNDict) = \{ lnc\_L\_1\_1, …, lnc\_L\_1\_p \};}$$

- last names with distance 2 are retrieved, using the EULA(2), according to the following expression:

$$\texttt{EULA(2)(LN, PDB\_L\_i\_LNDict) = \{ lnc\_L\_2\_1, …, lnc\_L\_2\_q \}.}$$

Again, each lnc_L_0_j, lnc_L_1_j, lnc_L_2_j represents a respective last name token hit at the respective hierarchical level L, with Levenshtein distance 0, 1 or 2.

Afterwards, at step 24, using the FN/LN index lists in each of the PDB_L_i's, lists of sorted database record identifiers (RIDs) may be generated, for each of the first/last name token hits found in the previous step 23. In particular, a respective index list of records is associated to each of the fnc_L_0_j, fnc_L_1_j, fnc_L_2_j and lnc_L_0_j, lnc_L_1_j, lnc_L_2_j (each index list being at a respective hierarchical level L and for a respective Levenshtein distance 0, 1 or 2).

The results of the lookup procedure can therefore be summarized as follows:

```
GID hits
      dist 0 first names:
          FN -> { RID, ... }
      dist 0 last names:
          LN -> { RID, ... }
      dist 1 first names:
          fnc_GID_1_1 → { RID, ... }
          fnc_GID_1_n → { RID, ... }
      dist 1 last names
          lnc_GID_1_1 → { RID, ... }
          lnc_GID_1_p → { RID, ... }
```

```
dist 2 first names
      fnc_GID_2_1 → { RID, ... }
      fnc_GID_2_m → { RID, ... }
dist 2 last names
      lnc_GID_2_1 → { RID, ... }
      lnc_GID_2_q → { RID, ... }
SGS hits
dist 0 first names
      FN -> { RID, ... }
dist 0 last names
      LN -> { RID, ... }
dist 1 first names
      fnc_SGS_1_1 → { RID, ... }
      fnc_SGS_1_n → { RID, ... }
dist 1 last names
      lnc_SGS_1_1 → { RID, ... }
      lnc_SGS_1_p → { RID, ... }
dist 2 first names
      fnc_SGS_2_1 → { RID, ... }
      fnc_SGS_2_m → { RID, ... }
dist 2 last names
      lnc_SGS_2_1 → { RID, ... }
      lnc_SGS_2_q → { RID, ... }
GACID hits
dist 0 first names
      FN → { RID, ... }
dist 0 last names
      LN → { RID, ... }
dist 1 first names
      fnc_GACID_1_1 → { RID, ... }
      fnc_GACID_1_n → { RID, ... }
dist 1 last names
      Inc_GACID_1_1 → { RID, ... }
      lnc_GACID_1_p → { RID, ... }
dist 2 first names
      fnc_GACID_2_1 → { RID, ... }
      fnc_GACID_2_m → { RID, ... }
dist 2 last names
      lnc_GACID_2_1 → { RID, ... }
      lnc_GACID_2_q → { RID, ... }
GLOBAL hits
dist 0 first names
      FN -> { RID, ... }
dist 0 last names
      LN -> { RID, ... }
dist 1 first names
      fnc_GLOBAL_1_1 → { RID, ... }
      fnc_GLOBAL_1_n → { RID, ... }
dist 1 last names
      lnc_GLOBAL_1_1 → { RID, ... }
      lnc_GLOBAL_1_p → { RID, ... }
dist 2 first names
      fnc_GLOBAL_2_1 → { RID, ... }
      fnc_GLOBAL_2_m → { RID, ... }
dist 2 last names
      lnc_GLOBAL_2_1 → { RID, ... }
      lnc_GLOBAL_2_q → { RID, ... }
```

At step 25, all the above hit lists can be rearranged into two sets, one set for the first names and one set for the last names. Each element of the sets is a hit list for a respective first/last name token hit, denoted in the following by "token_GDIST_LDIST", to which two attributes are associated:

- the geographic distance against the input address: GDIST (GID, SGS, GACID, or GLOBAL); and
- the Levenshtein distance against the input name: LDIST (0, 1, or 2) .

The two sets of hit lists (including respective index lists of database record identifiers RIDs) are the following:

```
FIRST NAME hits
{
    fnc_GDIST_LDIST_1 → { RID, ... }
    fnc_GDIST_LDIST_N → { RID, ... } }
LAST NAME hits
{
    lnc_GDIST_LDIST_1 → { RID, ... }
    lnc_GDIST_LDIST_M → { RID, ... } }
```

At step 26, outcomes of the lookup algorithm are determined, computing the intersections of the record identifiers RIDs obtained picking one index list from first name hits and one list from last name hits.

There can be as many as NxM such outcomes (depending on the choice of FIRST NAME and LAST NAME hit lists), N being the total number of first name hits and M the total number of last name hits. According to a possible embodiment, only index lists with the same geographic distance may be picked to compute the above intersections, so the useful number of combinations may be smaller.

In any case, the final outcome of the pickup algorithm (i.e. the result of the above intersections) are a number of output records having associated therewith three output parameters:

- first name Levenshtein distance LDIST: (0, 1, or 2);
- last name Levenshtein distance LDIST: (0, 1, or 2); and
- geographic distance GDIST: (GID, SGS, GACID, or GLOBAL).

These output parameters allow to compute a weighted measure of similarity for each retrieved output record (balancing the first/last name token Levenshtein distance with the geographical distance from the input request), at step 27.

The actual weights to be applied to each parameter depend on the actual application and the actual characteristics of the data in the personal database. For example, if many errors are present in the first and last names of the records, it may be convenient to apply lower-value weights to the Levenshtein distance LDIST, with respect to the geographic distance GDIST, in the weighted measure of similarity.

The concept of extended ULA (EULA), used in the lookup algorithm for similarity searching of names in the person database 4 is now discussed in more details.

The input to the ULA contains two elements:

- an input string (in the example previously discussed, the input first/last name to be searched);
- a database of strings to be searched in the form of a "dictionary automaton", i.e. a finite state machine that recognizes strings belonging to a given dictionary (in the example previously discussed, the first-name or last-name dictionaries in the database objects PDB_L_i).

With the above input, the ULA is configured to "traverse" the dictionary automaton (i.e. to move it from state to state), where each state is either "accepting" or "not accepting" (i.e. the string seen so far belongs to the dictionary, or not); this traversal is steered by the input string.

The output (after the traversal) is the subset of the searched database of strings, with given Levenshtein distance with respect to the input string.

In particular, as discussed above, two ULAs are considered: ULA(1), which recognizes strings with Levenshtein distance 1 against a given input string, and ULA(2) which recognizes strings with Levenshtein distance 2 against the given input string.

The generic concept of ULA does not take into account the language specific semantics. For example, taking into account European languages, a replacement of a consonant into a different consonant (e.g. G → P) generally has a much higher weight than a replacement of two vowels (e.g. A → E). Thus, a generic ULA would yield a lot of irrelevant "hits" that indeed have the requested Levenshtein distance, but have very low "natural language similarity". Additionally, when scanning large dictionaries, the lookup for all required hits with requested Levenshtein distance would decrease runtime performance significantly.

As a further example, given the following database of strings (modeled in the ULA concept as a dictionary automaton recognizing a given dictionary):

ZWIN, ZSIN, ZRIN, KAKIN, KAJN, KAJIN, GAN, GAZIN, GAWN, JATK, JATL, JATR, *UJAN, OJIN, OJAN, JUAN, JOAN, JIUN, JIEN, JIAN, JEAN, JAI, JAINAD, IJIN, IJAN, EJIN, AJIN, AJAN* and the input string *"JAIN"*, then all of the above strings have Levenshtein distance 2 against the input string, thus all of them would be returned by ULA(2) as similar strings.

However, in the language context, only a subset of the above dictionary (marked in italics) contains actually similar names to the input string; the remaining strings only pollute the results, decreasing their quality and, at the same time, decreasing the runtime performance.

According to an aspect of the present solution, the extension of the ULA concept (providing the so called EULA) therefore envisages at least one (preferably both) of:

- skipping traversal of the dictionary automaton, if a string constructed so far heuristically does not promise a close enough hit (this allows to improve the quality of results and also to significantly improve performance on large dictionaries); and
- if a match has been found (i.e. during the traversal, both the ULA and the dictionary automaton are in accepting states), performing another heuristics allowing to discard results not close enough in a natural language context (this allows to further improve the quality of results).

Skipping the traversal of the dictionary automaton is now discussed in more details.

The decision whether the traversal of the dictionary should be continued is based on the input string (here denoted with R) and the string constructed so far (i.e. the prefix of the potential hit to be reached in the traversal, here denoted with P).

At any point, the ULA keeps track of P and the possible next characters that can be appended to P (this information is kept in the dictionary automaton): given a possible character "ch", the string C, defined as C=P+ch, is the potential new prefix to be considered later in the traversal (starting from a first character, additional characters are each time added during traversal, until a potential hit is found).

At this point in the algorithm, a number of heuristics are introduced that allows to discard or "trim" the entire C "branch" of the dictionary automaton, in case the similarity between the input string R and the string C constructed so far is not found to be promising for a potential hit; this greatly improves runtime performance and discards irrelevant hits.

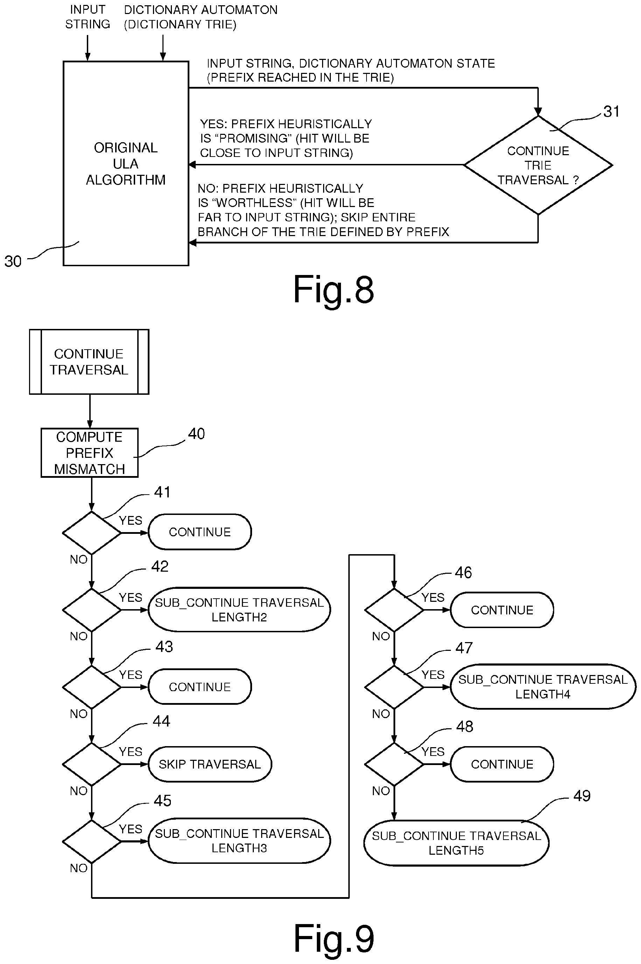

The modification of the ULA algorithm is conceptually shown in the flow diagram of Figure 8.

At block 30, the original ULA algorithm is performed, based on the input string R and the dictionary automaton (defining the "trie" of branching possibilities; a "trie" being a specialized tree-like structure for holding character strings in a tree, see for example: https://en.wikipedia.org/wiki/Trie).

The heuristics performed by the proposed EULA are encapsulated in block 31 (receiving the input string and the dictionary automaton state, i.e. the prefix P reached so far in the trie), in the "continue traversal" decision: a positive decision keeps the original ULA algorithm functionality for the C branch of the dictionary; negative decision skips the entire C branch and proceeds directly to the next character ch from the dictionary automaton to be appended to P, with a next decision to continue or not the traversal.

The above discussed heuristics are based on the semantic properties of the language used; in general, these heuristics are based on one or more of the following: the length of the input string R; the length of the string C reached so far in the traversal; the total number of similar characters in the strings R and C, possibly considering also the position of the characters in the strings; the number of similar vowels or consonants in the strings R and C. The heuristics may also consider static reference structures relating to the semantics of the specific language, e.g. containing similarities between consonants and/or vowels; commonly used combination of characters; and so on.

A possible embodiment of an algorithm that may be implemented in block 31 for the "continue traversal" decision is now discussed in more details, also with reference to Figure 9.

In the following, Xi will denote the i-th character of a string X, starting from 0; type(ch) will denote the function that returns "vowel" or "consonant" for a character ch.

First, at block 40, the 3-letter prefix mismatches (split into vowel and consonant mismatches) are computed, by comparing the corresponding letters of the input string R against the string C reached so far in the traversal.

In particular:

- R0!=C0 and R0!=C1 → increase type(R0) mismatch count;
- R1!=C0 and R1!=C1 and R1!=C2 → increase type(R1) mismatch count;
- R2!=C1 and R2!=C2 → increase type(R2) mismatch count.

In other words, for each of the three first positions in the strings, the number of mismatches is counted according to the above expressions, separately for the number of consonant and vowels mismatches.

The "continue traversal" decision (YES or NO) is made by the following algorithm (additional subroutines named "sub_*" will be defined in the following, according to a possible implementation):

- at block 41, if the expression (length(C)=1 OR length (C) > 5 OR length (R)=1) is true, then the traversal continues (decision is YES);
- otherwise, at block 42, if the expression (length(C)=2) is true, then the subroutine "sub_continueTraversalLength2" is implemented to make the decision;
- otherwise, at block 43, if the expression (length(R)<=2) is true, then the traversal continues (decision is YES);
- otherwise, at block 44, if the number of consonant mismatches is higher than one (mismatchConsonants>1) or the expression (R0!=C0 AND mismatchTotal=2) is true (where mismatchTotal denotes the total number of vowel and consonant mismatches), then further traversal is skipped (decision is NO) ;
- otherwise, at block 45, if the expression (length(C)=3) is true, then the subroutine "sub_continueTraversalLength3" is implemented to make the decision;
- otherwise, at block 46, it the expression (length(R)<=3) is true, then the traversal continues (decision is YES);
- otherwise, at block 47, if the expression (length(C)=4) is true, then the subroutine "sub_continueTraversalLength4" is implemented to make the decision;
- otherwise, at block 48, if the expression (length(R)<=4) is true, then the traversal continues (decision is YES);
- otherwise, at block 49, the subroutine "sub_continueTraversalLength5" is implemented to make the decision.

The code for a possible implementation of the subroutines is presented below in Java language; however, there are no Java-specific constructs/specifics used, thus the code can be treated as a pseudo-code illustrating the concept that can be implemented in any computer language.

It is only noted that a simple implementation of String object (called ByteString) is used here: in this implementation, all characters are assumed to be bytes (ASCII uppercase letters); obvious subroutines (such as "consonant") are skipped; in the pseudo-code below the input string (R) is denoted by "req", whereas the potential new prefix reached so far (C) is denoted by "soFar"; the object "LetterMatches" contains the mismatch counts computed as discussed above.

The listings below also contain static reference structures (table "sims" and table "len4combinations") containing similarities between letters and comparison parameters, according to a specific language semantics.

```
continueTraversalLen2
// this sub-routine performs a simple heuristics to predict whether the
 // string soFar (length 2) has a potential to be a good match; at least
 // one letter should be the same against the two first letters of "req"
 // examples of cases for which the decision is NO:
 // "req" "soFar"
 // ALKIN ZG
 // ANETRAD ZI
 boolean continueTraversalLen2(ByteString req, ByteString soFar)
 {
   byte req0, req1, soFar0, soFar1;
   return
     //
     (req0 = req.byteAt(0)) == (soFar0 = soFar.byteAt(0)) || //
       req0 == (soFar1 = soFar.byteAt(1)) || //
       (req1 = req.byteAt(1)) == soFar0 || //
       req1 == soFar1;
 }
continueTraversalLen3
 // this sub-routine performs heuristics to predict whether the string
 // soFar (length 3) has a potential to be a good match; the heuristics
 // are based on equality of letters, treating consonant matches with more
 // weight; examples of cases for which the decision is NO:
 // "req" "soFar"
 // ARINIHEV ZAI
 // BACIK ARC
 boolean continueTraversalLen3(ByteString req, ByteString soFar)
 {
   byte req0, req1, soFar0, soFar1;
   return
    //
    req.byteAt(2) != soFar.byteAt(2) || //
```

```
      !match(false, req0 = req.byteAt(0), soFar0 = soFar.byteAt(0)) || //
      !match(false, req1 = req.byteAt(1), soFar1 = soFar.byteAt(1)) || //
      (req0 == soFar1 && consonant(req0)) || //
      (req1 == soFar0 && consonant(req1)) || //
      (req0 == soFar1 && req1 == soFar0);
  }
match
 // this sub-routine is a helper method used in the main sub-routines
 boolean match(boolean m, byte b1, byte b2)
 {return m ? (b1 == b2) : (b1 != b2 && (consonant(b1) || consonant(b2)));
 }
continueTraversalLen4
 // this sub-routine performs heuristics to predict whether the string
 // soFar (length 4) has a potential to be a good match; the heuristics
 // are based on equality of letters in various configurations based on
 // person first and last names in European languages
 // examples of cases for which the decision is NO:
 // "req" "soFar"
 // ANETRAD ZNEC
 // ARINGER ZRIA
 boolean continueTraversalLen4(ByteString req, ByteString soFar)
 {
   if (//
     ((req.charAt(0) == 'S' && soFar.charAt(0) == 'S') || //
       (req.charAt(0) == 'Z' && soFar.charAt(0) == 'Z')) //
       && //
       req.charAt(1) == 'H' && soFar.charAt(1) == 'H')
   {return goodMatch(req.byteAt(2), req.byteAt(3), soFar.byteAt(2),
soFar.byteAt(3));
   }
   return
   (isLongSim1(req, soFar) || !match(req, soFar, len4combinations[0])) &&
                      !match(req, soFar, len4combinations[1]) &&
                      !match(req, soFar, len4combinations[2]) &&
   (isCross12(req, soFar) || !match(req, soFar, len4combinations[3]));
 }
goodMatch
 // this sub-routine is a helper method used in the main sub-routines
 boolean goodMatch(byte a1, byte a2, byte b1, byte b2)
 {
   return //
     goodMatch0(a1, b1, a2, b2) && //
       (goodMatch0(a1, b2, a2, b1) || a2 == b1) && //
       (goodMatch0(a2, b1, a1, b2) || a1 == b2) && //
       (goodMatch0(a2, b2, a1, b1) || a1 == b1);
 }
goodMatch0
 // this sub-routine is a helper method used in the main sub-routines
 boolean goodMatch0(byte cons1, byte cons2, byte rest1, byte rest2)
 {
   if (consonant(cons1) && consonant(cons2) && cons1 != cons2
     && !(Math.min(cons1, cons2) == 'M'
     && Math.max(cons1, cons2) == 'N'))
   {return cons1 == rest2 || //
      cons2 == rest1 || //
      (consonant(rest1) && consonant(rest2) && rest1 == rest2);
   }
   return true;
 }
isLongSim1
 // this sub-routine is a helper method used in the main sub-routines
 boolean isLongSim1(ByteString req, ByteString soFar)
 {return req.length() >= 9 && isSim(req.byteAt(0), soFar.byteAt(0), sim1);
```

```
  }
isSim
 // this sub-routine is a helper method used in the main sub-routines
 boolean isSim(byte b1, byte b2, byte sim)
 {return b1 == b2 || sims[b1][b2] == sim;
 }
Match
 // this sub-routine is a helper method used in the main sub-routines
 boolean match(ByteString s1, ByteString s2, boolean[] m)
 {for (int i = 0; i < m.length; i++)
   {
     if (!match(m[i], s1.byteAt(i), s2.byteAt(i)))
     {
       return false;
     }
   }
   return true;
 }
isCross12
 // this sub-routine is a helper method used in the main sub-routines
 boolean isCross12(ByteString req, ByteString soFar)
 {
  return req.byteAt(1) == soFar.byteAt(2) && req.byteAt(2) ==
soFar.byteAt(1);
 }
continueTraversalLen5
 // this sub-routine performs a number of heuristics to predict whether
 // the string soFar (length 5) has a potential to be a good match; the
 // heuristics are based on equality of letters (at similar positions in
 // the string); similar consonants, and various other measures based on
 // person first and last names in European languages
 // examples of cases for which the decision is NO:
 // "req" "soFar"
 // BARTENS BUXTE
 // ARINGER AZONG
 // the 5-character long prefixes still have a chance to be completed
 // to the required Levenshtein distance, but the full hit will most
 // likely be far from the input string, given the language context
 boolean continueTraversalLen5(ByteString req, ByteString soFar,
LetterMatches lm)
 {
   byte //
       req1 = req.byteAt(1), req2 = req.byteAt(2), //
       req3 = req.byteAt(3), req4 = req.byteAt(4), //
       soFar1 = soFar.byteAt(1), soFar2 = soFar.byteAt(2), //
       soFar3 = soFar.byteAt(3), soFar4 = soFar.byteAt(4);
  return
       (req3 == soFar4 ||
       req4 == soFar3 ||
       req2 == soFar4 ||
       req4 == soFar2 ||
        !match(false, req2, soFar3) ||
        !match(false, req3, soFar2) ||
        !match(req, soFar, len4combinations[4]))
       &&
       (lm.sum() < 2 ||
       (req3 == soFar2 && req4 == soFar3) ||
       (req3 == soFar1 && req4 == soFar2) ||
       (req2 == soFar3 && req3 == soFar4) ||
       (req1 == soFar3 && req2 == soFar4) ||
       (lm.sum() == 2 && (similarConsonants(req1, soFar1) ||
       similarConsonants(req2, soFar2))));
 }
```

```
similarConsonants
 // this sub-routine is a helper method used in the main sub-routines
 boolean similarConsonants(byte cons1, byte cons2)
 {return ('F' == cons1 || 'W' == cons1) && 'V' == cons2 ||
    'V' == cons1 && ('F' == cons2 || 'W' == cons2) ||
    'Z' == cons1 && 'S' == cons2 ||
    'S' == cons1 && 'Z' == cons2 ||
    'D' == cons1 && 'T' == cons2 ||
    'T' == cons1 && 'D' == cons2;
 }
```

The static reference table "sims" is constructed as follows:

```
byte[][] sims = new byte['Z' + 1]['Z' + 1];
byte sim1 = 1, sim2 = 2;
static
{addSim('B', 'P', sim1);
  addSim('C', 'K', sim2);
  addSim('I', 'J', sim2);
  addSim('I', 'Y', sim2);
  addSim('J', 'Y', sim2);
  addSim('M', 'N', sim2);
  addSim('S', 'Z', sim2);
}
void addSim(char ch1, char ch2, byte sim)
{
  sims[ch1][ch2] = sim;
  sims[ch2][ch1] = sim;
}
```

The static reference table "len4combinations" is constructed as follows:

```
boolean[][] len4combinations = //
  {
    //
    { false, true, true, false }, //
    { false, true, false, true }, //
    { true, false, true, false }, //
    { true, false, false, true }, //
    { true, true, false, false }, //
  }
```

As previously discussed, a further aspect of the proposed EULA envisages implementing further heuristics to evaluate the matches found during the traversal.

In particular, when the EULA reaches an accepting state during the traversal of the dictionary automaton (i.e. both the EULA and the dictionary automatons are in accepting states), the desired hit has been found (i.e. the string from the dictionary automaton has requested Levenshtein distance against the input string). At this point, a "trimming" is introduced, that discards the hits that are too far given the context of European languages and the problem domain (i.e. the fact that first and last names of persons have to be retrieved with the search).

The trimming is based on a variety of heuristics on the input string R (denoted by tokenReq in the pseudo-code below) and/or the found hit candidate C (denoted by tokenCand in the pseudo-code below), based on one or more of: the Levenshtein distance parameter of the EULA; the letter matches computed in the previous steps (as discussed above, considering consonant matches, vowel matches and total matches); the positions of the letter matches or mismatches in the strings R and C; the length of the same strings R and C (e.g. if their length is equal or different and, in that case, the amount of difference is computed); and so on.

The decision whether to discard or skip a hit is encapsulated in the following routine denoted "isWrongMatch": positive decision means that the hit will be discarded.

```
isWrongMatch
 // the main routine that decides whether the match is wrong (to be
 // discarded) or good (to be kept in the result)
```

```
// a number of heuristics is performed based on the required Levenshtein
// distance, the lengths of the strings, whether the strings have equal
// lengths
boolean isWrongMatch(ByteString tokenReq, ByteString tokenCand,
LetterMatches lm)
 {if (!haveCommonLetter(tokenReq, tokenCand, lm))
   {
    return true;
   }
   if (la.getEditDistance() == 1 && //
       (isShortTypo1(tokenReq, tokenCand) || isShortTypo2(tokenReq,
tokenCand)))
   {
    return true;
   }
   if (la.getEditDistance() == 2 && //
      (tokenCand.length() < 3 || //
          isProbWrongLM1(tokenReq, tokenCand) || isProbWrongLM2(tokenReq,
tokenCand)))
   {
    return true;
   }
   if (la.getEditDistance() == 2 && //
      tokenReq.length() < 7 && tokenCand.length() < 7 && //
      !equalsConsonants(tokenReq, tokenCand))
    if (tokenReq.length() == tokenCand.length())
   {{if (isWrongMatchEqualLen(tokenReq, tokenCand))
      {
       return true;
      }
   }
   else if (isWrongMatchDiffLen(tokenReq, tokenCand))
   {
     return true;
   }
   }
   return false;
 }
```

The sub-routines of the main algorithm are presented below; the pseudo-code of these sub-routines also uses some of the sub-routines described previously.

```
haveCommonLetter
 // this sub-routine performs the initial heuristics measure - the goal is
 // to detect cases where the two strings do not have any similar
 // ("common") letter; the "severity" of mismatch depends on the position
// of the differing letters
 boolean haveCommonLetter(ByteString s1, ByteString s2, LetterMatches lm)
 {
   if (lm.mismatchTotal < 2)
   {
    return true;
   }
   int s1l = s1.length(), s2l = s2.length();
   if (s1l < 5 || s2l < 5 || lm.mismatchConsonants > 1 || s1.byteAt(0) !=
s2.byteAt(0))
   {
    return false;
   }
   ByteString longer, shorter;
   if (s1l < s2l)
   {
    shorter = s1;
```

```
       longer = s2;
     }
     else
     {shorter = s2;
      longer = s1;
     }
     byte lo3 = longer.byteAt(3), lo4 = longer.byteAt(4), sh2 =
   shorter.byteAt(2);
     return //
        (lo3 == shorter.byteAt(1) && lo4 == sh2) || //
          (lo3 == sh2 && lo4 == shorter.byteAt(3)) ||
           lm.mismatchTotal == 2
         && (similarConsonants(longer.byteAt(1), shorter.byteAt(1))
             || similarConsonants(longer.byteAt(2), sh2));
   }
isShortTypo2
 // this sub-routine detects a wrong match for Levenshtein distance 2
 private static boolean isShortTypo2(ByteString tokenReq, ByteString
tokenCand)
 {return tokenCand.length() < 3 && //
     tokenReq.length() > 4 && //
     !(vowel(tokenCand.byteAt(0)) && //
       tokenReq.contains(tokenCand));
 }
isShortTypo1
 // this sub-routine detects a wrong match for Levenshtein distance 1
 private static boolean isShortTypo1(ByteString tokenReq, ByteString
tokenCand)
 {return tokenCand.length() < 4 && //
     tokenReq.length() < 4;
 }
isProbWrongLM1
 // this sub-routine detects a wrong match for Levenshtein distance 2 and
// short tokens
 private static boolean isProbWrongLM1(ByteString tokenReq, ByteString
tokenCand)
 {if (tokenReq.length() == 1)
   {return tokenCand.length() > 2;
   }
   if (tokenCand.length() == 1)
   {return tokenReq.length() > 2;
   }
   return tokenReq.length() <= 6 && //
     tokenReq.byteAt(0) != tokenCand.byteAt(0) && //
     tokenReq.byteAt(1) == tokenCand.byteAt(1);
 }
isProbWrongLM2
 // this sub-routine detects a wrong match for Levenshtein distance 2 and
// short tokens
 private static boolean isProbWrongLM2(ByteString tokenReq, ByteString
tokenCand)
 {return tokenReq.length() <= 5 && //
     tokenReq.byteAt(0) != tokenCand.byteAt(0) && //
     tokenReq.length() > tokenCand.length() && //
     tokenReq.indexOf(tokenCand, 1) == -1;
 }
equalsConsonants
 // this sub-routine is a helper method used in the main sub-routines
 private static boolean equalsConsonants(ByteString s1, ByteString s2)
 {
// this routine returns true if both strings are the same after
// removing all vowels; for brevity the actual pseudo-code is skipped
 }
```

```
isWrongMatchDiffLen
 // this sub-routine detects a wrong match for Levenshtein distance 2 and
 // long tokens of different lengths
 private static boolean isWrongMatchDiffLen(ByteString tokenReq,
 {ByteString tokenCand)
   ByteString shorter, longer;
   if (tokenReq.length() < tokenCand.length())
   {
    shorter = tokenReq;
    longer = tokenCand;
   }
   else
   {shorter = tokenCand;
    longer = tokenReq;
   }
   if (shorter.length() < 4 && longer.length() > 4 &&
consonant(longer.byteAt(3)) && consonant(longer.byteAt(4)) &&
longer.byteAt(3) != shorter.byteAt(2))
   {
    return true;
   }
   return !longer.startsWith(shorter) && //
      (shorter.length() < 4 || !areAllSim(tokenReq, tokenCand, 4, 1));
 }
isWrongMatchEqualLen
 // this sub-routine detects a wrong match for Levenshtein distance 2 and
 // long tokens of equal lengths
 private static boolean isWrongMatchEqualLen(ByteString tokenReq,
   ByteString tokenCand)
 {return tokenReq.length() <= 4 || !areAllSim(tokenReq, tokenCand, 5, 2);
 }
areAllSim
 // this sub-routine is a helper method used in the main sub-routines
 private static boolean areAllSim(ByteString s1, ByteString s2, int limit,
   int increment)
 {for (int i = 0; i < limit; i += increment)
   {
    if (!isSim(s1.byteAt(i), s2.byteAt(i), sim2))
    {
      return false;
    }
   }
   return true;
 }
```

The advantages that the described solution allows to achieve are clear from the foregoing description.

In particular, it is again underlined that the present solution allows to perform efficient and fast name selections in large databases of person data; the quality of the retrieved results and at the same time the performance on large dictionaries are vastly improved with respect to known solutions. The retrieved results are particularly strong against any possible errors in the database records, such as due to human mistakes or technical problems.

In particular, the solution envisages exploitation of the specifics of person/company name data, with its semantic and statistical knowledgebase; by concentrating on person/company data the results can be significantly better than those of a generic approach, not tuned for person/company data. Geographical aspects of person/company data are further exploited, thus achieving even higher quality results.

The solution affords real-time speed, with performance of e.g. max 100 ms per single request, with an average well below 100 ms.

The solution discussed can be implemented, with possible modifications to the applied semantics heuristics and geolocation attributes, to any database, irrespective of the country or language. Thanks to this "functional scalability", the solution may be easily adapted for use in different countries, cross-Europe, and globally. Specific "modules" can encapsulate geo-specific knowledge base (geo-locations for a specific country, its population statistical data, specific semantic rules, etc.).

Moreover, the solution does not require complex and hard to maintain computer systems and offers instead simplicity of operation and maintenance.

The solution also offers full technical scalability in aspects of speed, throughput, and data volume: in case of growing traffic and/or data volume, the only requirement for keeping the service level unchanged is to increase hardware resources (without changes to the system).

Finally, it is clear that modifications and variations may be applied to the solution described and shown, without departing from the scope of the appended claims.

In particular, in order to eliminate very small differences between name tokens that in real life are mostly ignored and treated as "common typos" (such as René/Rene, Mustermann/Musterman), and to eliminate language diacritic characters, an aspect of the present solution may envisage performing the so-called "match-coding" on the original name tokens. In this manner, name tokens are left as ASCII characters, and the EULA concept has only to perform "meaningful" work, i.e. detecting "true" typos and mistakes; the lookup algorithm may thus operate on the matchcoded version of the original data tokens. Any known match-coding techniques may be implemented (in a manner not discussed in details herein).

Moreover, it is underlined that further and/or different algorithms and heuristics for the "continue traversal" decision in the algorithm may be implemented, e.g. according to specific semantics of the language or properties of the country.

## Claims

1. A computer system (1), comprising a computing unit designed to be coupled to a database (4) of person data storing a plurality of records, each record including at least respective person name data and respective address location data, the computing unit being configured to retrieve from the database (4) output records matching an input request, including at least a name and an address to be searched,
   wherein the respective address location data and address to be searched include address reference data defining a city, street identifier and house number; and the computing unit is configured to:

   implement indexing of the database records based on geo-coordinate attributes derived from the respective address location data;
   determine corresponding geo-coordinate attributes associated with the address to be searched;
   evaluate geographic proximity between the respective address location data and the address to be searched, as a function of said geo-coordinate attributes;
   evaluate name similarity between the respective person name data and the name to be searched based on Levenshtein distance implementing an extended Universal Levenshtein Automata configured to take into account language specific semantics; and
   retrieve the output records matching the input request, based on a combined evaluation of the name similarity and the geographic proximity,
   wherein the database (4) relates to a geographic territory, and the computing unit is configured to divide said geographic territory in a plurality of geolocation areas at different hierarchical geographic area levels (L);
   said geo-coordinate attributes being based on the database records, or address to be searched, belonging to a respective geolocation area at a respective hierarchical geographic area level.

2. The system according to claim 1, wherein the plurality of geolocation areas at the different hierarchical geographic area levels (L) include:

   - Geo ID, a geographic area corresponding to a given element of a grid in which the geographic territory can be divided;
   - Street Geographical Surrounding, a surrounding area of a given street including geographically surrounding streets;
   - Grouping Administrative City ID, i.e. an area covering a group of cities surrounding a given city; and
   - Global, i.e. an area corresponding to the whole territory.

3. The system according to claim 2, configured to implement indexing of the database records by:

   for each of the hierarchical geographic area levels (L), splitting the database (4) into a set of database objects (PDB_L_i), wherein each of the database object contains data of records from a respective geographic area at the respective hierarchical geographic area level;

for each database object (PDB_L_i), creating: two dictionary automatons (FNDict, LNDict), one for first name tokens and one for last name tokens based on the person name data of the respective records; and two index lists, a first-name index list, including a list of sorted identifiers of records in the database (4) that contain the respective first name tokens; and a last name index list, including sorted identifiers of records in the database (4) that contain the respective last name tokens.

4. The system according to claim 3, configured to retrieve the output records, by performing an index lookup procedure in the index lists of the database objects (PDB_L_i), based on the name and the address of the input request; wherein the index lookup procedure includes:

based on the address of the input request, determining corresponding geolocation areas at each of said respective hierarchical geographic area levels (L);
determining the database objects (PDB_L_i) related to the corresponding geolocation areas;
for each database object (PDB_L_i), retrieving, based on a first name (FN) and a last name (LN) of the input request, respective first name and last name token hits in the first name and last name dictionaries (FNDict, LNDict), based on name similarity implementing the extended Universal Levenshtein Automata at a number of Levenshtein distances;
for each of the first name and last name token hits, retrieving the associated lists of sorted identifiers of records in the database, wherein two attributes are associated to each list: the geographic distance against the input address; and the Levenshtein distance against the input name.

5. The system according to claim 4, configured to retrieve output records, by further:

computing intersections of the identifiers obtained picking one list from a first name token hits and one list from a last name token hits; and
computing a measure of similarity for each record identified by the intersection, based on a weighted combination of the first/last name token Levenshtein distance with the geographical distance from the input request.

6. The system according to claim 4 or 5, wherein the computing unit is configured to implement the extended Universal Levenshtein Automata for traversing the first name and last name dictionaries (FNDict, LNDict) and identify the first name and last name token hits with respect to an input string (R) associated to the first and last name to be searched; wherein the computing unit is further configured to:

skip traversal of the first name and last name dictionaries (FNDict, LNDict), if a string (C) constructed so far does not promise a hit according to heuristics based on the language specific semantics; and
if a match has been found during the traversal, performing further heuristics allowing to discard results based on the language specific semantics.

7. The system according to claim 6, wherein the heuristics are based on one or more of the following: the length of the input string (R); the length of the string (C) reached so far in the traversal; the total number of similar characters in the strings; the positions of similar and different in the strings; the number of similar vowels and/or consonants in the strings.

8. The system according to claim 7, wherein the heuristics are also designed to consider static reference structures relating to the language specific semantics, containing at least similarities between consonants and/or vowels and commonly used combination of characters.

9. A computer method, for retrieving output records matching an input request from a database (4) of person data storing a plurality of records, each record including at least respective person name data and respective address location data, wherein the input request includes at least a name and an address to be searched, wherein the respective address location data and address to be searched include address reference data defining a city, street identifier and house number; and the method further comprises:

implementing indexing of the database records based on geo-coordinate attributes derived from the respective address location data;
determining corresponding geo-coordinate attributes associated with the address to be searched;
evaluating geographic proximity between the respective address location data and the address to be searched, as a function of said geo-coordinate attributes;

evaluating name similarity between the respective person name data and the name to be searched based on Levenshtein distance implementing an extended Universal Levenshtein Automata, configured to take into account language specific semantics; and

retrieving the output records matching the input request, based on a combined evaluation of the name similarity and the geographic proximity,

wherein the database (4) relates to a geographic territory; further comprising dividing said geographic territory in a plurality of geolocation areas at different hierarchical geographic area levels (L);

said geo-coordinate attributes being based on the database records, or address to be searched, belonging to a respective geolocation area at a respective hierarchical geographic area level.

10. The method according to claim 9, wherein the plurality of geolocation areas at different hierarchical geographic area levels (L) include:

- Geo ID, a geographic area corresponding to a given element of a grid in which the geographic territory can be divided;
- Street Geographical Surrounding, a surrounding area of a given street including geographically surrounding streets;
- Grouping Administrative City ID, i.e. an area covering a group of cities surrounding a given city; and
- Global, i.e. an area corresponding to the whole territory.

11. The method according to claim 10, wherein implementing indexing of the database records comprises:

for each of the hierarchical geographic area levels (L), splitting the database (4) into a set of database objects (PDB_L_i), wherein each of the database object contains data of records from a respective geographic area at the respective hierarchical geographic area level;

for each database object (PDB_L_i), creating: two dictionary automatons (FNDict, LNDict), one for first name tokens and one for last name tokens based on the person name data of the respective records; and two index lists, a first-name index list, including a list of sorted identifiers of records in the database (4) that contain the respective first name tokens; and a last name index list, including sorted identifiers of records in the database that contain the respective last name tokens.

12. The method according to claim 11, wherein retrieving the output records comprises performing an index lookup procedure in the index lists of the database objects (PDB_L_i), based on the name and the address of the input request; wherein performing the index lookup procedure comprises:

based on the address of the input request, determining corresponding geolocation areas at each of said respective hierarchical geographic area levels (L);

determining the database objects (PDB_L_i) related to the corresponding geolocation areas;

for each database object (PDB_L_i), retrieving, based on a first name (FN) and a last name (LN) of the input request, respective first name and last name token hits in the first name and last name dictionaries (FNDict, LNDict), based on name similarity implementing the extended Universal Levenshtein Automata at a number of Levenshtein distances;

for each of the first name and last name token hits, retrieving the associated lists of sorted identifiers of records in the database, wherein two attributes are associated to each list: the geographic distance against the input address; and the Levenshtein distance against the input name.

13. The method according to claim 12, wherein retrieving the output records further comprises:

computing intersections of the identifiers obtained picking one list from a first name token hits and one list from a last name token hits; and

computing a measure of similarity for each record identified by the intersection, based on a weighted combination of the first/last name token Levenshtein distance with the geographical distance from the input request.

14. The method according to claim 12 or 13, further comprising implementing the extended Universal Levenshtein Automata for traversing the first name and last name dictionaries (FNDict, LNDict), and identifying the first name and last name token hits with respect to an input string (R) associated to the first and last name to be searched; further comprising:

skipping traversal of the first name and last name dictionaries (FNDict, LNDict), if a string (C) constructed so far does not promise a hit according to heuristics based on the language specific semantics; and
if a match has been found during the traversal, performing further heuristics allowing to discard results based on the language specific semantics.

**15.** A computer program, comprising instructions which, when the program is executed by a computing module, cause the computing module to execute the method according to any one of claims 9-14.

**Patentansprüche**

**1.** Computersystem (1), das eine Berechnungseinheit aufweist, die so ausgelegt ist, dass sie mit einer Personendaten-Datenbank (4), die eine Vielzahl von Datensätzen speichert, gekoppelt ist, wobei jeder Datensatz mindestens jeweilige Personennamendaten und jeweilige Adressortdaten aufweist, wobei die Berechnungseinheit so konfiguriert ist, dass sie von der Datenbank (4) Ausgabedatensätze abfragt, die mit der Eingabeanfrage übereinstimmen, die mindestens einen Namen und eine Adresse, nach denen gesucht werden soll, aufweist,
wobei die jeweiligen Adressortdaten und die Adresse, nach der gesucht werden soll, Adressreferenzdaten aufweisen, die eine Stadt, eine Straßenbezeichnung und eine Hausnummer definieren, und die Berechnungseinheit so konfiguriert ist, dass sie:

eine Indizierung der Datenbankdatensätze auf Grundlage von Geokoordinateneigenschaften implementiert, die von den jeweiligen Adressortdaten abgeleitet sind,
entsprechende Geokoordinateneigenschaften bestimmt, die mit der Adresse assoziiert sind, nach der gesucht werden soll,
eine geographische Nähe zwischen den jeweiligen Adressortdaten und der Adresse, die gesucht werden soll, als eine Funktion der Geokoordinateneigenschaften bewertet,
eine Namensähnlichkeit zwischen den jeweiligen Personennamendaten und dem Namen, der gesucht werden soll, auf Grundlage einer Levenshtein-Distanz bewertet, die einen erweiterten Universal-Levenshtein-Automaten implementiert, der so konfiguriert ist, dass er sprachspezifische Semantiken berücksichtigt, und
die Ausgabedatensätze, die mit der Eingabeanfrage übereinstimmen, auf Grundlage einer kombinierten Bewertung der Namensähnlichkeit und der geographischen Nähe abfragt,
wobei die Datenbank (4) ein geographisches Territorium betrifft und die Berechnungseinheit so konfiguriert ist, dass sie das geographische Territorium in eine Vielzahl von Geolokalisationsgebiete mit unterschiedlichen hierarchischen geographischen Gebietsniveaus (L) teilt,
wobei die Geokoordinateneigenschaften auf den Datenbankdatensätzen oder einer Adresse, die gesucht werden soll, die zu einem jeweiligen Geolokalisationsgebiet mit einem jeweiligen hierarchischen geographischen Gebietsniveau gehören, basiert sind.

**2.** System gemäß Anspruch 1, wobei die Vielzahl von Geolokalisationsgebieten mit unterschiedlichen hierarchischen geographischen Gebietsniveaus (L) aufweist:

- Geo ID, ein geographisches Gebiet, das einem vorgegebenen Element eines Gitters entspricht, in das das geographische Territorium geteilt werden kann,
- Street Geographical Surrounding, ein umgebendes Gebiet einer vorgegebenen Straße, das geographisch umgebende Straßen umfasst,
- Grouping Administrative City ID, d.h. ein Gebiet, das eine Gruppe von Städten, die eine vorgegebene Stadt umgeben, abdeckt, und
- Global, d.h. ein Gebiet, das dem gesamten Territorium entspricht.

**3.** System gemäß Anspruch 2, das so konfiguriert ist, dass es eine Indizierung der Datenbankdatensätze dadurch implementiert, dass es:

für jedes der hierarchischen geographischen Gebietsniveaus (L), die Datenbank (4) in einen Satz von Datenbankobjekten (PDB_L_i) aufspaltet, wobei jedes der Datenbankobjekte Daten von Datensätzen von einem jeweiligen geographischen Gebiet mit dem jeweiligen hierarchischen geographischen Gebietsniveau enthält,
für jedes Datenbankobjekt (PDB_L_i) erzeugt: zwei Wörterbuchautomaten (FNDict, LNDict), einen für Vornamentoken und einen für Nachnamentoken, die auf den Personennamendaten der jeweiligen Datensätze basieren, und zwei Indexlisten, eine Vornamenindexliste, die eine Liste von sortierten Bezeichnungen von Datensätzen in der Datenbank (4) aufweist, die die jeweiligen Vornamentoken enthalten, und eine Nachnamenindexliste, die sortierte Bezeichnungen von Datensätzen in der Datenbank (4) aufweist, die die jeweiligen Nachnamentoken enthalten.

4. System gemäß Anspruch 3, das so konfiguriert ist, dass es die Ausgabedatensätze durch Durchführen einer Index-Lookup-Verarbeitung in den Indexlisten der Datenbankobjekte (PDB_L_i) auf Grundlage des Namens und der Adresse der Eingabeanfrage abruft, wobei die Index-Lookup-Verarbeitung aufweist:

Bestimmen von entsprechenden Geolokalisationsgebieten bei einem jeden von den jeweiligen hierarchischen geographischen Gebietsniveaus (L) auf Grundlage der Adresse der Eingabeanfrage,
Bestimmen der Datenbankobjekte (PDB_L_i) in Bezug auf die entsprechenden Geolokalisationsgebiete,
für jedes Datenbankobjekt (PDB_L_i), Abfragen auf Grundlage eines Vornamens (FN) und eines Nachnamens (LN) der Eingabeanfrage eines jeweiligen Vornamen- und Nachnamentokentreffers in den Vornamen- und Nachnamenwörterbüchern (FNDict, LNDict) auf Grundlage der Namensähnlichkeit, die den erweiterten Universal-Levenshtein-Automaten implementiert, bei einer Anzahl von Levenshtein-Distanzen,
für jeden von den Vornamen- und Nachnamentokentreffern, Abfragen der assoziierten Listen von sortierten Bezeichnungen von Datensätzen in der Datenbank, wobei zwei Attribute mit jeder Liste assoziiert sind: die geographische Distanz gegen die Eingabeadresse und die Levenshtein-Distanz gegen den Eingabenamen.

5. System gemäß Anspruch 4, das so konfiguriert ist, dass es Ausgabedatensätze ferner dadurch abfragt, dass es:

Schnittmengen von den Bezeichnungen, die durch Auswählen einer Liste von den Vornamentokentreffern und einer Liste von Nachnamentokentreffern erhalten werden, berechnet, und
ein Maß einer Ähnlichkeit für jeden Datensatz, der durch die Schnittmenge identifiziert wird, auf Grundlage einer gewichteten Kombination der Vor-/Nachnamentoken-Levenshtein-Distanz mit der geographischen Distanz von der Eingabeanfrage berechnet.

6. System gemäß Anspruch 4 oder 5, wobei die Berechnungseinheit so konfiguriert ist, dass sie den erweiterten Universal-Levenshtein-Automaten zum Durchlaufen der Vornamen- und Nachnamenwörterbücher (FNDict, LNDict) implementiert und die Vornamen- und Nachnamentokentreffer in Bezug auf einen Eingabestring (R), der mit dem Vor- und Nachnamen, die gesucht werden sollen, assoziiert ist, identifiziert,
wobei die Berechnungseinheit ferner so konfiguriert ist, dass sie:

einen Durchlauf der Vornamen- und Nachnamenwörterbücher (FNDict, LNDict) auslässt, falls ein String (C), der bisher konstruiert ist, keinen Treffer gemäß Heuristiken verspricht, die auf den sprachspezifischen Semantiken basieren, und
falls eine Übereinstimmung während des Durchlaufs gefunden wurde, weitere Heuristiken durchführt, die es erlauben, Ergebnisse auf Grundlage der sprachspezifischen Semantiken zu verwerfen.

7. System gemäß Anspruch 6, wobei die Heuristiken auf einem oder mehreren der folgenden Elemente basiert sind: die Länge des Eingabestrings (R), die Länge des Strings (C), der bisher beim Durchlauf erreicht ist, die gesamte Anzahl von ähnlichen Zeichen in den Strings, die Positionen von ähnlich und unterschiedlichen in den Strings, die Anzahl von ähnlichen Vokalen und/oder Konsonanten in den Strings.

8. System gemäß Anspruch 7, wobei die Heuristiken auch so ausgebildet sind, dass sie eine statische Referenzstruktur in Bezug auf die sprachspezifischen Semantiken berücksichtigen, die mindestens eine Ähnlichkeit zwischen Konsonanten und/oder Vokalen und eine häufig verwendete Kombination von Zeichen aufweist.

9. Computerverfahren zum Abfragen von Ausgabedatensätzen, die mit einer Eingabeanfrage übereinstimmen, von einer Personendaten-Datenbank (4), die eine Vielzahl von Datensätzen speichert, wobei jeder Datensatz mindestens jeweilige Personennamendaten und jeweilige Adressortdaten aufweist, wobei die Eingabeanfrage mindestens einen Namen und eine Adresse, nach denen gesucht werden soll, aufweist,
wobei jeweilige Adressortdaten und eine Adresse, nach der gesucht werden soll, Adressereferenzdaten aufweisen, die eine Stadt, eine Straßenbezeichnung und eine Hausnummer definieren, und das Verfahren ferner aufweist:

Implementieren einer Indizierung der Datenbankdatensätze auf Grundlage von Geokoordinateneigenschaften, die von den jeweiligen Adressortdaten abgeleitet werden,
Bestimmen von entsprechenden Geokoordinateneigenschaften, die mit der Adresse, nach der gesucht werden soll, assoziiert sind,

Bewerten einer geographischen Nähe zwischen den jeweiligen Adressortdaten und der Adresse, die gesucht werden soll, als eine Funktion der Geokoordinateneigenschaften,

Bewerten einer Namensähnlichkeit zwischen den jeweiligen Personennamendaten und dem Namen, nach dem gesucht werden soll, auf Grundlage einer Levenshtein-Distanz, die einen erweiterten Universal-Levenshtein-Automaten implementiert, der so konfiguriert ist, dass er sprachspezifische Semantiken berücksichtigt, und

Abfragen der Ausgabedatensätze, die mit der Eingabeanfrage übereinstimmen, auf Grundlage einer kombinierten Bewertung der Namensähnlichkeit und der geographischen Nähe,

wobei die Datenbank (4) ein geographisches Territorium betrifft, wobei das Verfahren ferner Teilen des geographischen Territoriums in eine Vielzahl von Geolokalisationsgebieten mit unterschiedlichen hierarchischen geographischen Gebietsniveaus (L) aufweist,

wobei die Geokoordinateneigenschaften auf den Datenbankdatensätzen oder einer Adresse, nach der gesucht werden soll, die zu einem jeweiligen Geolokalisationsgebiet mit einem jeweiligen hierarchischen geographischen Gebietsniveau gehören, basiert sind.

10. Verfahren nach Anspruch 9, wobei die Vielzahl von Geolokalisationsgebieten mit unterschiedlichen hierarchischen geographischen Gebietsniveaus aufweist:

- Geo ID, ein geographisches Gebiet, das einem vorgegebenen Element eines Gitters entspricht, in das das geographische Territorium geteilt werden kann,
- Street Geographical Surrounding, ein umgebendes Gebiet einer vorgegebenen Straße, das geographisch umgebende Straßen umfasst,
- Grouping Administrative City ID, d.h. ein Gebiet, das eine Gruppe von Städten, die eine vorgegebene Stadt umgeben, abdeckt, und
- Global, d.h. ein Gebiet, das dem gesamten Territorium entspricht.

11. Verfahren gemäß Anspruch 10, wobei Implementieren eine Indizierung der Datenbankdatensätze aufweist:

für jedes der hierarchischen geographischen Gebietsniveaus (L), Aufspalten der Datenbank (4) in einen Satz von Datenbankobjekten (PDB_L_i), wobei jedes der Datenbankobjekte Daten von Datensätzen von einem jeweiligen geographischen Gebiet bei dem jeweiligen hierarchischen geographischen Gebietsniveau enthält,

für jedes Datenbankobjekte (PDB_L_i), Erzeugen von: zwei Wörterbuchautomaten (FNDict, LNDict), einen für Vornamentoken und einen für Nachnamentoken, die auf den Personennamendaten der jeweiligen Datensätze basieren, und zwei Indexlisten, eine Vornamenindexliste, die eine Liste von sortierten Bezeichnungen von Datensätzen in der Datenbank (4) aufweist, die die jeweiligen Vornamentoken enthalten, und eine Nachnamenindexliste, die sortierte Bezeichnungen von Datensätzen in der Datenbank (4) aufweist, die die jeweiligen Nachnamentoken enthalten.

12. Verfahren gemäß Anspruch 11, wobei Abfragen der Ausgabedatensätze Durchführen einer Index-Lookup-Verarbeitung in den Indexlisten der Datenbankobjekte (PDB_L_i) auf Grundlage des Namens und der Adresse der Eingabeanfrage aufweist, wobei Durchführen der Index-Lookup-Verarbeitung aufweist:

auf Grundlage der Adresse der Eingabeanfrage, Bestimmen von entsprechenden Geolokalisationsgebieten bei jedem von den jeweiligen hierarchischen geographischen Gebietsniveaus (L),

Bestimmen der Datenbankobjekte (PDB_L_i) in Bezug auf die entsprechenden Geolokalisationsgebiete,

für jedes Datenbankobjekt (PDB_L_i), Abfragen auf Grundlage eines Vornamens (FN) und eines Nachnamens (LN) der Eingabeanfrage von jeweiligen Vornamen- und Nachnamentokentreffern in den Vornamen- und Nachnamenwörterbüchern (FNDict, LNDict) auf Grundlage der Namensähnlichkeit, die den erweiterten Universal-Levenshtein-Automaten implementiert, bei einer Anzahl von Levenshtein-Distanzen,

für jeden der Vornamen- und Nachnamentokentreffer, Abfragen der assoziierten Listen und sortierten Bezeichnungen von Datensätzen in der Datenbank, wobei zwei Attribute mit jeder Liste assoziiert sind: die geographische Distanz gegen die Eingabeadresse und die Levenshtein-Distanz gegen den Eingabenamen.

13. Verfahren gemäß Anspruch 12, wobei Abfragen der Ausgabedatensätze ferner aufweist:

Berechnen von Schnittmengen der Bezeichnungen, die durch Auswählen einer Liste von Vornamentokentreffern und einer Liste von Nachnamentokentreffern erhalten werden, und

Berechnen eines Maßes einer Ähnlichkeit für jeden Datensatz, der durch die Schnittmenge identifiziert wird, auf Grundlage einer gewichteten Kombination der Vor-/Nachnamentoken-Levenshtein-Distanz mit der geographischen Distanz von der Eingabeanfrage.

14. Verfahren gemäß Anspruch 12 oder 13, das ferner Implementieren des erweiterten Universal-Levenshtein-Automaten zum Durchlaufen der Vornamen- und Nachnamenwörterbücher (FNDict, LNDict) und Identifizieren der Vornamen- und Nachnamentokentreffer in Bezug auf einen Eingabestring (R), der mit dem Vor- und Nachnamen, die gesucht werden sollen, assoziiert ist, aufweist,
das ferner aufweist:

Auslassen eines Durchlaufs der Vornamen- und Nachnamenwörterbücher (FNDict, LNDict), falls ein String (C), der bisher konstruiert ist, keinen Treffer gemäß Heuristiken verspricht, die auf den sprachspezifischen Semantiken basieren, und
falls eine Übereinstimmung während des Durchlaufs gefunden wurde, Durchführen weiterer Heuristiken, die es erlauben, Ergebnisse auf Grundlage der sprachspezifischen Semantiken zu verwerfen.

15. Computerprogramm, das Instruktionen aufweist, die, wenn das Programm durch ein Berechnungsmodul ausgeführt wird, das Berechnungsmodul veranlassen, das Verfahren gemäß einem der Ansprüche 9-14 auszuführen.

## Revendications

1. Système informatique (1), comprenant une unité de calcul conçue pour être couplée à une base de données (4) de données de personnes stockant une pluralité d'enregistrements, chaque enregistrement comportant au moins des données de nom de personne respectives et des données de localisation d'adresse respectives, l'unité de calcul étant configurée pour récupérer à partir de la base de données (4) des enregistrements de sortie concordant avec une requête d'entrée, comportant au moins un nom et une adresse devant être recherchés,
dans lequel les données de localisation d'adresse respectives et l'adresse devant être recherchée comportent des données de référence d'adresse définissant une ville, un identifiant de rue et un numéro de maison ; et l'unité de calcul est configurée pour :

mettre en application une indexation des enregistrements de base de données sur la base d'attributs de géo-coordonnées dérivés des données de localisation d'adresse respectives ;
déterminer des attributs de géo-coordonnées correspondants associés à l'adresse devant être recherchée ;
évaluer une proximité géographique entre les données de localisation d'adresse respectives et l'adresse devant être recherchée, en fonction desdits attributs de géo-coordonnées ;
évaluer une similarité de noms entre les données de nom de personne respectives et le nom devant être recherché sur la base d'une distance de Levenshtein en mettant en application un automate de Levenshtein universel étendu configuré pour prendre en compte une sémantique spécifique à une langue ; et
récupérer les enregistrements de sortie concordant avec la requête d'entrée, sur la base d'une évaluation combinée de la similarité de noms et de la proximité géographique, dans lequel la base de données (4) se rapporte à un territoire géographique, et l'unité de calcul est configurée pour diviser ledit territoire géographique en une pluralité de zones de géolocalisation à différents niveaux de zones géographiques hiérarchiques (L) ;
lesdits attributs de géo-coordonnées étant basés sur les enregistrements de base de données, ou une adresse devant être recherchée, appartenant à une zone de géolocalisation respective à un niveau de zone géographique hiérarchique respectif.

2. Système selon la revendication 1, dans lequel la pluralité de zones de géolocalisation aux différents niveaux de zones géographiques hiérarchiques (L) comportent :

- géo-ID, une zone géographique correspondant à un élément donné d'un quadrillage en lequel le territoire géographique peut être divisé ;
- environnement géographique de rue, une zone environnante d'une rue donnée comportant des rues environnantes géographiquement ;
- ID de villes administratives groupées, c'est-à-dire une zone couvrant un groupe de villes environnant une ville donnée ; et
- global, c'est-à-dire une zone correspondant au territoire entier.

3. Système selon la revendication 2, configuré pour mettre en application une indexation des enregistrements de base de données en :

pour chacun des niveaux de zones géographiques hiérarchiques (L), partageant la base de données (4) en un ensemble d'objets de base de données (PDB_L_i), dans lequel chacun des objets de base de données contient des données d'enregistrements provenant d'une zone géographique respective au niveau de zone géographique hiérarchique respectif ;

pour chaque objet de base de données (PDB_L_i), créant :

deux automates de dictionnaires (FNDict, LNDict), un pour des jetons de prénoms et un pour des jetons de noms de famille sur la base des données de nom de personne des enregistrements respectifs ; et deux listes d'index, une liste d'index de prénoms, comportant une liste d'identifiants triés d'enregistrements dans la base de données (4) qui contiennent les jetons de prénoms respectifs ; et une liste d'index de noms de famille, comportant des identifiants triés d'enregistrements dans la base de données (4) qui contiennent les jetons de noms de famille respectifs.

4. Système selon la revendication 3, configuré pour récupérer les enregistrements de sortie, en mettant en application une procédure de consultation d'index dans les listes d'index des objets de base de données (PDB_L_i), sur la base du nom et de l'adresse de la requête d'entrée ; dans lequel la procédure de consultation d'index comporte :
sur la base de l'adresse de la requête d'entrée, la détermination de zones de géolocalisation correspondantes à chacun desdits niveaux de zones géographiques hiérarchiques respectifs (L) ;
la détermination des objets de base de données (PDB_L_i) se rapportant aux zones de géolocalisation correspondantes ;
pour chaque objet de base de données (PDB_L_i), la récupération, sur la base d'un prénom (FN) et d'un nom de famille (LN) de la requête d'entrée, de réponses pertinentes de jetons de prénoms et de noms respectives dans les dictionnaires (FNDict, LNDict) de prénoms et de noms de famille, sur la base d'une similarité de noms en mettant en application l'automate de Levenshtein universel étendu à un nombre de distances de Levenshtein ;
pour chacune des réponses pertinentes de jetons de prénoms et de noms, la récupération des listes associées d'identifiants triés d'enregistrements dans la base de données, dans lequel deux attributs sont associés à chaque liste : la distance géographique contre l'adresse d'entrée ; et la distance de Levenshtein contre le nom d'entrée.

5. Système selon la revendication 4, configuré pour récupérer des enregistrements de sortie, en outre en :

calculant des intersections des identifiants obtenus en prenant une liste à partir de réponses pertinentes de jeton de prénom et une liste à partir de réponses pertinentes de jeton de nom de famille ; et
calculant une mesure de similarité pour chaque enregistrement identifié par l'intersection, sur la base d'une combinaison pondérée de la distance de Levenshtein de jetons de prénoms/noms de famille avec la distance géographique à partir de la requête d'entrée.

6. Système selon la revendication 4 ou 5, dans lequel l'unité de calcul est configurée pour mettre en application l'automate de Levenshtein universel étendu afin de traverser les dictionnaires (FNDict, LNDict) de prénoms et de noms de famille et identifier les réponses pertinentes de jetons de prénoms et de noms de famille par rapport à une chaîne d'entrée (R) associée au prénom et au nom de famille devant être recherchés ;
dans lequel l'unité de calcul est en outre configurée pour :

sauter la traversée des dictionnaires (FNDict, LNDict) de prénoms et de noms de famille, si une chaîne (C) construite jusqu'ici ne promet pas de réponse pertinente conformément à des heuristiques sur la base de la sémantique spécifique à une langue ; et
si une concordance a été trouvée durant la traversée, la mise en application d'autres heuristiques permettant de rejeter des résultats sur la base de la sémantique spécifique à une langue.

7. Système selon la revendication 6, dans lequel les heuristiques sont basées sur un ou plusieurs de ce qui suit : la longueur de la chaîne d'entrée (R) ; la longueur de la chaîne (C) recherchée jusqu'ici dans la traversée ; le nombre total de caractères similaires dans les chaînes ; les positions de similaires et différents dans les chaînes ; le nombre de voyelles et/ou de consonnes similaires dans les chaînes.

8. Système selon la revendication 7, dans lequel les heuristiques sont également conçues pour prendre en considération des structures de référence statiques se rapportant à la sémantique spécifique à une langue, contenant au moins des similarités entre des consonnes et/ou des voyelles et une combinaison de caractères communément utilisée.

**9.** Procédé informatique, pour récupérer des enregistrements de sortie concordant avec une requête d'entrée provenant d'une base de données (4) de données de personnes stockant une pluralité d'enregistrements, chaque enregistrement comportant au moins des données de nom de personne respectives et des données de localisation d'adresse respective, dans lequel la requête d'entrée comporte au moins un nom et une adresse devant être recherchés, dans lequel les données de localisation d'adresse respectives et l'adresse devant être recherchée comportent des données de référence d'adresse définissant une ville, un identifiant de rue et un numéro de maison ; et le procédé comprend en outre :

la mise en application d'une indexation des enregistrements de base de données sur la base d'attributs de géo-coordonnées dérivés des données de localisation d'adresse respectives ;
la détermination d'attributs de géo-coordonnées correspondants associés à l'adresse devant être recherchée ;
l'évaluation d'une proximité géographique entre les données de localisation d'adresse respectives et l'adresse devant être recherchée, en fonction desdits attributs de géo-coordonnées ;
l'évaluation d'une similarité de noms entre les données de nom de personne respectives et le nom devant être recherché sur la base d'une distance de Levenshtein en mettant en application un automate de Levenshtein universel étendu, configuré pour prendre en compte une sémantique spécifique à une langue ; et
la récupération des enregistrements de sortie concordant avec la requête d'entrée, sur la base d'une évaluation combinée de la similarité de noms et de la proximité géographique,
dans lequel la base de données (4) se rapporte à un territoire géographique ; comprenant en outre la division dudit territoire géographique en une pluralité de zones de géolocalisation à différents niveaux de zones géographiques hiérarchiques (L) ;
lesdits attributs de géo-coordonnées étant basés sur les enregistrements de base de données, ou une adresse devant être recherchée, appartenant à une zone de géolocalisation respective à un niveau de zone géographique hiérarchique respectif.

**10.** Procédé selon la revendication 9, dans lequel la pluralité de zones de géolocalisation à différents niveaux de zones géographiques hiérarchiques (L) comportent :

- géo-ID, une zone géographique correspondant à un élément donné d'un quadrillage en lequel le territoire géographique peut être divisé ;
- environnement géographique de rue, une zone environnante d'une rue donnée comportant des rues environnantes géographiquement ;
- ID de villes administratives groupées, c'est-à-dire une zone couvrant un groupe de villes environnant une ville donnée ; et
- global, c'est-à-dire une zone correspondant au territoire entier.

**11.** Procédé selon la revendication 10, dans lequel la mise en application de l'indexation des enregistrements de base de données comprend :

pour chacun des niveaux de zones géographiques hiérarchiques (L), le partage de la base de données (4) en un ensemble d'objets de base de données (PDB_L_i), dans lequel chacun des objets de base de données contient des données d'enregistrements provenant d'une zone géographique respective au niveau de zone géographique hiérarchique respectif ;
pour chaque objet de base de données (PDB_L_i), la création : de deux automates de dictionnaires (FNDict, LNDict), un pour des jetons de prénoms et un pour des jetons de noms de famille sur la base des données de nom de personne des enregistrements respectifs ; et de deux listes d'index, une liste d'index de prénoms, comportant une liste d'identifiants triés d'enregistrements dans la base de données (4) qui contiennent les jetons de prénoms respectifs ; et d'une liste d'index de noms de famille, comportant des identifiants triés d'enregistrements dans la base de données qui contiennent les jetons de noms de famille respectifs.

**12.** Procédé selon la revendication 11, dans lequel la récupération des enregistrements de sortie comprend la mise en application d'une procédure de consultation d'index dans les listes d'index des objets de base de données (PDB_L_i), sur la base du nom et de l'adresse de la requête d'entrée ; dans lequel la mise en application de la procédure de consultation d'index comprend :

sur la base de l'adresse de la requête d'entrée, la détermination de zones de géolocalisation correspondantes à chacun desdits niveaux de zones géographiques hiérarchiques respectifs (L) ;
la détermination des objets de base de données (PDB_L_i) se rapportant aux zones de géolocalisation correspondantes ;

pour chaque objet de base de données (PDB_L_i), la récupération, sur la base d'un prénom (FN) et d'un nom de famille (LN) de la requête d'entrée, de réponses pertinentes de jetons de prénoms et de noms respectives dans les dictionnaires (FNDict, LNDict) de prénoms et de noms de famille, sur la base d'une similarité de noms en mettant en application l'automate de Levenshtein universel étendu à un nombre de distances de Levenshtein ;

pour chacune des réponses pertinentes de jetons de prénoms et de noms, la récupération des listes associées d'identifiants triés d'enregistrements dans la base de données, dans lequel deux attributs sont associés à chaque liste : la distance géographique contre l'adresse d'entrée ; et la distance de Levenshtein contre le nom d'entrée.

13. Procédé selon la revendication 12, dans lequel la récupération des enregistrements de sortie comprend en outre :

le calcul d'intersections des identifiants obtenus en prenant une liste à partir de réponses pertinentes de jeton de prénom et une liste à partir de réponses pertinentes de jetons de noms de famille ; et

le calcul d'une mesure de similarité pour chaque enregistrement identifié par l'intersection, sur la base d'une combinaison pondérée de la distance de Levenshtein de jetons de prénoms/noms de famille avec la distance géographique à partir de la requête d'entrée.

14. Procédé selon la revendication 12 ou 13, comprenant en outre la mise en application de l'automate de Levenshtein universel étendu afin de traverser les dictionnaires (FNDict, LNDict) de prénoms et de noms de famille, et l'identification des réponses pertinentes de jetons de prénoms et de noms de famille par rapport à une chaîne d'entrée (R) associée au prénom et au nom de famille devant être recherchés ;

comprenant en outre :

le saut de la traversée des dictionnaires (FNDict, LNDict) de prénoms et de noms de famille, si une chaîne (C) construite jusqu'ici ne promet pas de réponse pertinente conformément à des heuristiques sur la base de la sémantique spécifique à une langue ; et

si une concordance a été trouvée durant la traversée, la mise en application d'autres heuristiques permettant de rejeter des résultats sur la base de la sémantique spécifique à une langue.

15. Programme informatique, comprenant des instructions qui, lorsque le programme est exécuté par un module de calcul, amènent le module de calcul à exécuter le procédé selon l'une quelconque des revendications 9 à 14.

# Fig.1

example:
x=2521, y=4903
gid=165221159
from 52.06350N 7.01675E
to   52.06800N 7.02350E

# Fig.2A

6

# Fig.2B

# Fig.3A

# Fig.3B

# Fig.4A

# Fig.4B

Fig.4C

Fig.4D

Fig.4E

Fig.5A

Fig.5B

DATABASE INDEXING

SPLITTING OF DATABASE — 10

CREATION OF DICTIONARIES — 12

CREATION OF INDEX LIST — 14

Fig.6

Fig.7

INPUT STRING | DICTIONARY AUTOMATON (DICTIONARY TRIE)

INPUT STRING, DICTIONARY AUTOMATON STATE (PREFIX REACHED IN THE TRIE)

ORIGINAL ULA ALGORITHM

YES: PREFIX HEURISTICALLY IS "PROMISING" (HIT WILL BE CLOSE TO INPUT STRING)

NO: PREFIX HEURISTICALLY IS "WORTHLESS" (HIT WILL BE FAR TO INPUT STRING); SKIP ENTIRE BRANCH OF THE TRIE DEFINED BY PREFIX

CONTINUE TRIE TRAVERSAL ?

31

30

## Fig.8

CONTINUE TRAVERSAL

COMPUTE PREFIX MISMATCH — 40

41
YES → CONTINUE
NO

42
YES → SUB_CONTINUE TRAVERSAL LENGTH2
NO

43
YES → CONTINUE
NO

44
YES → SKIP TRAVERSAL
NO

45
YES → SUB_CONTINUE TRAVERSAL LENGTH3
NO

46
YES → CONTINUE
NO

47
YES → SUB_CONTINUE TRAVERSAL LENGTH4
NO

48
YES → CONTINUE
NO

49
SUB_CONTINUE TRAVERSAL LENGTH5

## Fig.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- PL 424112

**Non-patent literature cited in the description**

- AEDA: Arabic edit distance algorithm Towards a new approach for Arabic name matching. **HESHAM H AB-DEL GHAFOUR et al.** Computer Engineering&Systems (ICCES), 2011 International Conference On. IEEE, 29 November 2011, 307-311
- **KEVIN SAHR et al.** Geodesic Discrete Global Grid Systems. *Cartography and Geographic Information Science,* 121-134
- **CLODOVEU A. DAVIS et al.** Assessing the Certainty of Locations Produced by an Address Geocoding System. *GEOINFORMATICA,* 13 January 2007, vol. 11 (1), 103-129
- **KLAUS U. SCHULZ ; STOYAN MIHOV.** Fast String Correction with Levenshtein-Automata. *International Journal on Document Analysis and Recognition,* November 2002, vol. 5 (1), 67-85
- **PETAR N. MITANKIN.** Universal Levenshtein Automata. Building and Properties (Thesis). University St. Kliment Ohridski, 2005